# EUROPEAN PATENT SPECIFICATION

(11) **EP 0 674 416 B1**
(45) Date of publication and mention of the grant of the patent: **02.05.2003**
(21) Application number: 95400376.0
(22) Date of filing: 22.02.1995
(51) Int. Cl.: H04M 1/66, H04N 1/32

(54) **Data communication apparatus with call limiting function**
Datenkommunikationsgerät mit Anrufbegrenzungsfähigkeit
Appareil de communication de données avec fonction de limitation d'appel

(30) Priority: 23.03.1994 JP 7664894; 08.06.1994 JP 15039694; 13.12.1994 JP 33272894
(43) Date of publication of application: 27.09.1995
(73) Proprietor: CANON KABUSHIKI KAISHA, Tokyo (JP)
(72) Inventor: Yoshida, Takehiro, c/o Canon K.K., Ohta-ku, Tokyo (JP); Wada, Satoshi, c/o Canon K.K., Ohta-ku, Tokyo (JP); Uno, Hiromichi, c/o Canon K.K., Ohta-ku, Tokyo (JP); Shimahara, Yuji, c/o Canon K.K., Ohta-ku, Tokyo (JP)
(74) Representative: Santarelli

(56) References cited:
- EP-A- 0 454 387
- GB-A- 2 253 969
- US-A- 4 893 335
- US-A- 5 200 995

## Description

### BACKGROUND OF THE INVENTION

### Field of the Invention

The invention relates to a communication apparatus for communicating through a communication line and, more particularly, to a communication apparatus to which a terminal can be connected and which shares the communication line together with the terminal.

### Related Background Art

A conventional facsimile apparatus can be connected to a telephone and can switch a communication line to the telephone or a facsimile communicating section (modem).

The conventional facsimile apparatus has an outgoing call (or call generation) limiting function and can prevent a waste of communication fee.

However, in the outgoing call limiting function of the conventional facsimile apparatus, a call generation from the telephone connected to the facsimile apparatus cannot be limited.

To solve such a problem, the applicant of the present invention has already filed the European Patent Application No. EP-A-0 632 630, which falls within the scope of Article 54(3) EPC.

Document GB-A-2 253 969 discloses a sending control method of a facsimile device, which includes a step of requesting a secret number from a user.

Document US-A-4 893 335 discloses a control system for a telephone line, which has in particular a toll call restriction operating mode and which uses a toll access code to allow selective use of long distance dialing.

Document US-A-5 200 995 discloses a universal outgoing call restriction circuit, which prevents a telephone or a plurality of telephones from making unauthorized or restricted calls to specific numbers or unspecific groups of numbers.

### SUMMARY OF THE INVENTION

The invention relates to the improvement of the above Patent Application EP-A-0 632 630.

Namely, the invention relates to a communication apparatus to which a terminal such as a telephone or the like can be connected and intends to improve the communication apparatus in which in case of communicating via the terminal, the terminal is connected to a communication line, and in the case where the communication apparatus itself communicates, the terminal is disconnected from the communication line. Even in a mode in which the call generation from the terminal is limited, when a special operation is executed, the call generation is made effective. Therefore, a call is generated in a special case, a waste of a communication fee and a deterioration in operability can be prevented. A call generation can be performed by an operator who knows the special operation. Particularly, the call generation to a specific destination can be realized.

According to the invention, in order to limit a call generation from the terminal connected to the communication apparatus, connecting means for connecting the telephone or communicating means in the communicating apparatus to a communication line disconnects the terminal from the communication line in the outgoing call limiting mode.

The communication apparatus of the invention has detecting means for detecting the operation at a terminal.

By providing the detecting means on the communication line side of the connecting means, the communication apparatus can also detect a signal of the line during communication.

In case of generating a call to a specific destination from the terminal, the communication terminal generates a call in place of the terminal and, after that, connects the communication line and the terminal, thereby enabling a communication with the specific destination to be executed.

In the case where the telephone line is disconnected from the terminal and is connected to the communicating means side by the connecting means, it is possible to construct in a manner such that the telephone line is not captured by providing switching means between the connecting means and the communicating means.

First and second switching means are provided in the connecting means and the first switching means connects the communication line to the second switching means or communicating means, thereby enabling the second switching means to disconnect the terminal from the communication line.

Even in the outgoing call limiting mode, it is also possible to construct in a manner such that the terminal can respond to an incoming call (or a call generation).

A fact that the outgoing call limiting mode has been set or a fact that the outgoing call limiting mode was released by a specific operation can be also certainly informed to the operator of the terminal by a voice message, display, or buzzer.

The outgoing call limiting mode can be set and reset from the terminal or can be also set by a time.

In the outgoing call limiting mode, the call generation from the communication apparatus main body can be also limited.

In case of applying the invention to a facsimile apparatus, in order to disconnect the terminal (telephone) from the communication line, it is sufficient that so called a CML relay is set to the terminal side in a standby mode and is switched to the communicating means (modem) side when the terminal is off-hooked. It is also possible to construct in a manner such that an H relay provided between the CML relay and the terminal is used and, when the terminal is off-hooked, the terminal is disconnected from the communication line. When the outgoing call limiting mode is set, the terminal can be also disconnected from the communication line by the H relay irrespective of the off-hook of the terminal. The terminal judges whether the specific operation has been performed or not, and after the CML relay was switched to the communicating means side, if the specific operation has already been executed, the CML relay can be also returned to the terminal side. On the other hand, it is also possible to construct in a manner such that the terminal is disconnected from the communication line by the H relay in the standby mode and, when the terminal is off-hooked, the H relay is switched so long as the mode is not the outgoing call limiting mode.

Thus, according to a first aspect, the invention provides a communication apparatus having the features recited in the characterizing portion of claim 1.

According to a second aspect, the invention also provides an outgoing call limitation method having the features recited in the characterizing portion of claim 13.

Additional features are recited in the dependent claims.

### BRIEF DESCRIPTION OF THE DRAWINGS

Fig. 1 is a block diagram showing the first embodiment of the invention;
Fig. 2 is a flowchart showing the operation of the first embodiment;
Fig. 3 is a block diagram showing the second embodiment of the invention;
Fig. 4 is a flowchart showing the operation of the second embodiment of the invention;
Fig. 5 is a flowchart showing the operation of the third embodiment of the invention;
Fig. 6 is a block diagram showing the fourth embodiment of the invention;
Fig. 7 is a flowchart showing the operation of the fourth embodiment;
Fig. 8 is a flowchart showing the operation of the fourth embodiment;
Fig. 9 is a block diagram showing the fifth embodiment of the invention;
Fig. 10 is a flowchart showing the operation according to the fifth embodiment;
Fig. 11 is a flowchart showing the operation according to the sixth embodiment of the invention;
Fig. 12 is a block diagram showing the seventh embodiment of the invention;
Fig. 13 is a block diagram showing the eighth embodiment of the invention;
Fig. 14 is a block diagram showing the ninth embodiment of the invention;
Fig. 15 is a flowchart showing a control procedure for data registration of a control circuit in a facsimile apparatus;
Fig. 16 is a flowchart showing a control procedure for outgoing call (call generation) limitation from a main body of the control circuit in the facsimile apparatus;
Fig. 17 is a flowchart showing a control procedure for outgoing call (call generation) limitation from a telephone of the control circuit in the facsimile apparatus;
Fig. 18 is a flowchart showing a control procedure of the control circuit in the facsimile apparatus according to the tenth embodiment of the invention;
Fig. 19 is a flowchart showing a control procedure of the control circuit in the facsimile apparatus according to the eleventh embodiment of the invention;
Fig. 20 is a flowchart showing a control procedure of the control circuit in the facsimile apparatus according to the twelfth embodiment of the invention; and
Fig. 21 is a flowchart showing a control procedure of the control circuit in the facsimile apparatus according to the thirteenth embodiment of the invention.

### DETAILED DESCRIPTION OF THE PREFERRED EMBODIMENTS

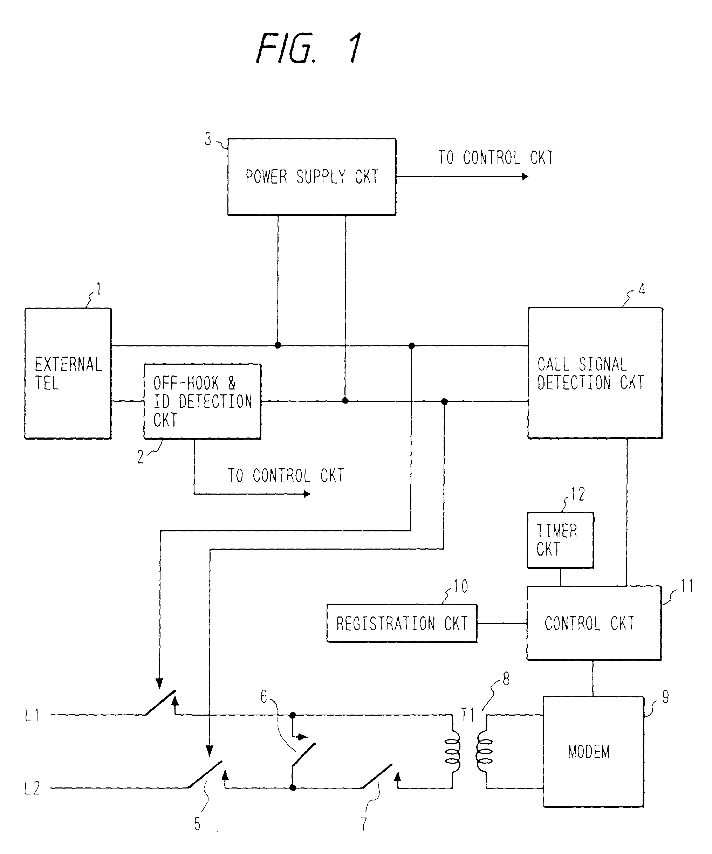

Fig. 1 is a block diagram showing a construction of the first embodiment of the invention.

An external telephone 1 having a call generating function is connected to a facsimile apparatus of the embodiment. The facsimile apparatus comprises: an ID detection circuit 2 for detecting an off-hook of the external telephone 1 and also detecting a transmission signal (ID) from the external telephone 1; a power supply circuit 3 which is electrically isolated from telephone lines L1 and L2 and supplies a power source to the external telephone 1 when a first switching circuit 5 is connected to a modem 9 side; a call signal detection circuit 4 for detecting a call signal from an exchange; the first switching circuit (CML relay) 5 for switching the lines L1 and L2 to the external telephone 1 side or modem 9 side; a third switching circuit (P relay) 6 for generating a dial pulse; a second switching circuit (S relay) 7 which is open for a period of time during which the third switching circuit 6 generates a pulse, thereby preventing the generation of a counter electromotive force from a transformer 8; the transformer 8 in which the primary side (lines L1 and L2) and the secondary side arc separated and which can superimpose a DC voltage; the modem 9 for facsimile communication; a registration circuit 10 which can turn on or off the outgoing call limiting function and can register each parameter; a control circuit 11 which comprises an ROM in which softwares have been written, an RAM to preserve various data, a CPU for making the softwares operative, and the like and judges output signals from the ID detection circuit 2 and the like, thereby controlling the first switching circuit 5 and second switching circuit 7; and a timer circuit 12 for managing the time.

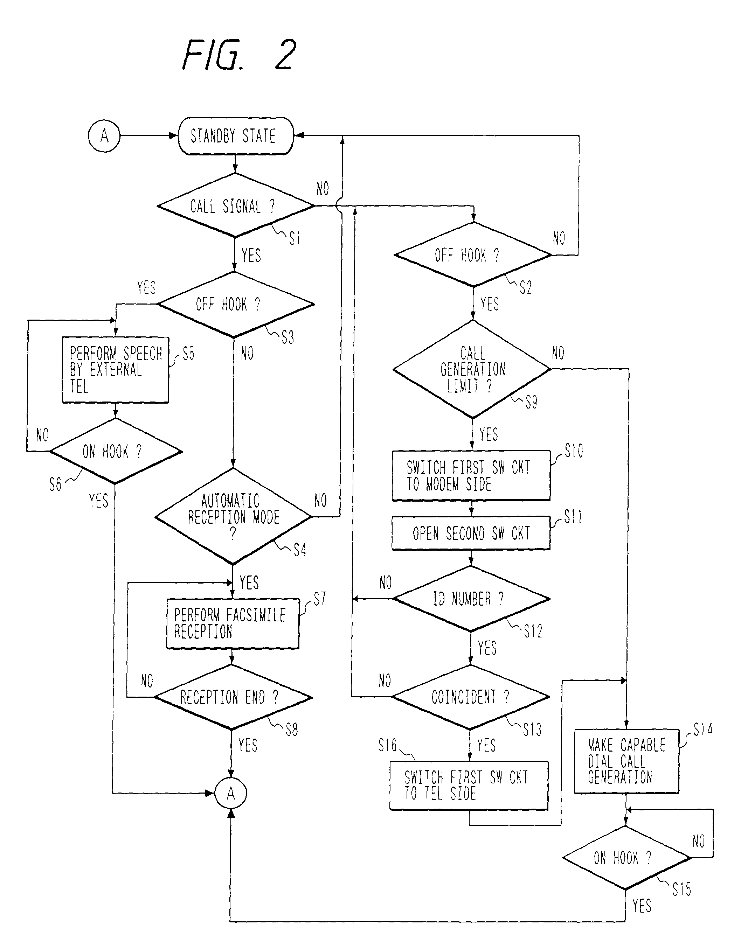

Fig. 2 is a flowchart showing the operation of the embodiment.

First, in the above construction, in a standby mode, the first switching circuit 5 switches the lines to the external telephone 1 side as shown in Fig. 1, and the second and third switching circuits 7 and 6 are open as shown in Fig 1.

In a facsimile communication state, the first switching circuit 5 is switched to the modem 9 side and the second switching circuit 7 is closed. In this case as well, however, the third switching circuit 6 is open.

In the registration circuit 10, the outgoing call limiting function is set to on. In the case where the lines are captured (on-hooked) from the external telephone 1 so as to perform a dial call generation, the off-hook detection circuit 2 operates.

The control circuit 11 analyzes both of a signal from the off-hook detection circuit 2 and a signal from the call signal detection circuit 4 (S1 to S3).

When the signal of the off-hook detection circuit 2 is valid and the signal from the call signal detection circuit 4 is invalid (S1, S2), the outgoing call limiting function is on (S9). Therefore, the control circuit 11 switches the first switching circuit 5 to the modem 9 side (S10). The second switching circuit 7 is opened (in this instance, the third switching circuit 6 is also opened) (S11). Thus, the external telephone 1 is disconnected from the lines and the dial call generation cannot be performed (limited).

The reason why the control circuit 11 analyzes the signal from the call signal detection circuit 4 is to judge whether the off-hook of the external telephone 1 is an off-hook for the purpose of the dial call generation or an off-hook to respond to a calling from the exchange. Namely, in the case where the signal from the call signal detection circuit 4 is valid and the signal from the off-hook detection circuit 2 is also valid (S1, S3), the control circuit 11 judges that the off-hook of the external telephone 1 is the off-hook to respond to the call from the exchange. Therefore, the apparatus is shifted to a speech mode in a state in which the first switching circuit 5 is switched to the external telephone 1 side (S5). The apparatus is returned to the standby mode by the on-hook of the external telephone (S6). In the case where the call signal is detected (S1) and the facsimile is in an auto reception mode (S4), a facsimile reception is executed (S7). After completion of the signal reception (S8), the apparatus is returned to the standby mode.

In step S10, when the first switching circuit 5 subsequently switched to the modem 9 side and the apparatus is in a state in which the dial call generation from the external telephone 1 is limited, the control circuit 11 makes the power supply circuit 3 operative and supplies a power source to the external telephone 1.

When the external telephone 1 sends an ID signal (for instance, "25" by using a dial), the control circuit 11 analyzes the ID number through the ID detection circuit 2 (S12). Such a number has previously been registered in the registration circuit 10 as an ID number which can release the dial outgoing call limiting function. When the ID number from the external telephone 1 coincides with the ID number which has previously been registered (S13), the control circuit 11 switches the first switching circuit 5 to the external telephone 1 (S16) and connects it to the lines, thereby enabling the dial call generation to be performed (S14).

In this case, either one of the mode to temporarily release the outgoing call limiting function (for example, the dial call generation can be performed only once after completion of the release) and the mode to release until the outgoing call limiting function is again turned on by the registration circuit 10 can be previously selected by the registration circuit 10.

When the external telephone 1 is subsequently on-hooked (S15), the signal of the off-hook detection circuit 2 is made invalid. The control circuit 11 confirms it and is returned to the standby mode.

In the construction as mentioned above, by using the timer circuit 12, the outgoing call limiting function can be automatically turned on or off. For instance, if functions such as to turn on the outgoing call limiting function at 8:00 p.m. and to turn off at 7:00 a.m. by the registration circuit 10, the timer circuit 12 detects such times and the control circuit 11 automatically controls the outgoing call limiting operation described above.

In the above embodiment, the power supply circuit 3 is electrically isolated and can supply a power source enough to make the dial function of the external telephone operative.

Although the off-hook detection circuit and ID detection circuit have been shown by the same block, they can be also separated. Further, the ID detection circuit can detect both or one of a DTMF and a pulse dial as a transmission signal of the external telephone.

In case of an apparatus which doesn't have the dial pulse function in the facsimile main body, the second and third switching circuits 7 and 6 in Fig. 1 can be omitted. However, this is not within the scope of the claims.

Namely, to realize the outgoing call limiting function in the invention, by merely switching the first switching circuit 5 to the modem 9 side from the external telephone 1, a similar effect is obtained.

However, if the first switching circuit 5 is switched to the modem 9 side when the second switching circuit 7 doesn't exist, the lines are closed by the transformer 8. Therefore, such a closure is recovered in a short time.

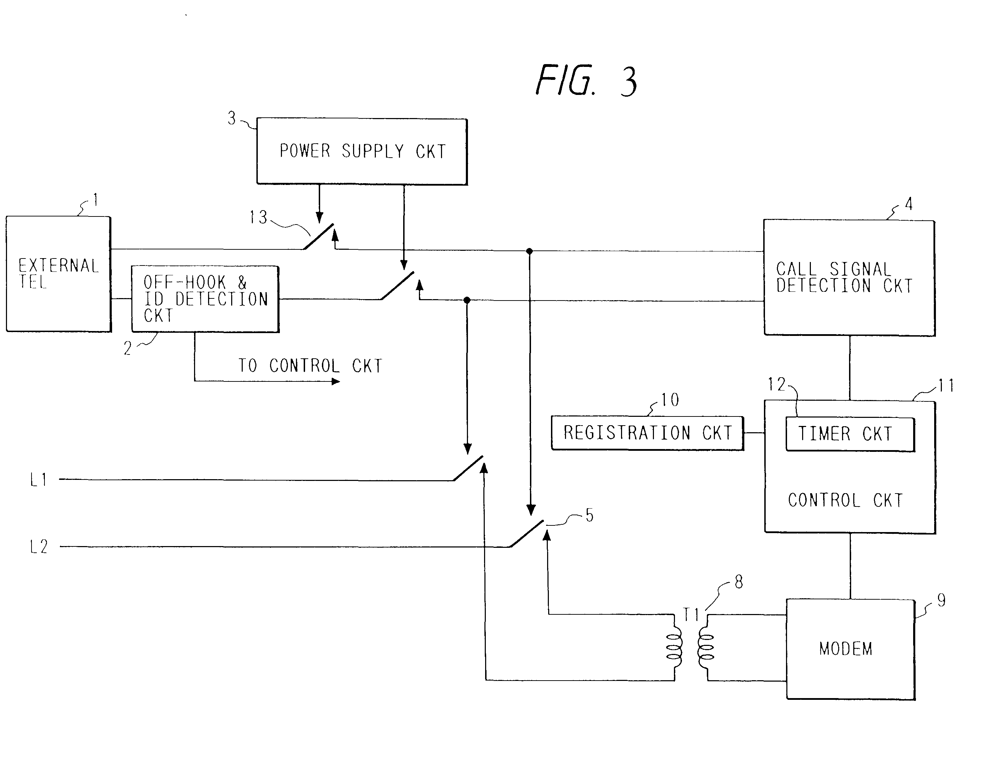

Fig. 3 is a block diagram showing a construction of the second embodiment of the invention.

According to the construction of the second embodiment, a fourth switching circuit 13 for disconnecting the telephone 1 from the lines and connecting to the power supply circuit 3 is provided in the construction shown in Fig. 1 of the first embodiment. Since the other constructions are common to those in Fig. 1, they are designated by the same reference numerals and their descriptions are omitted.

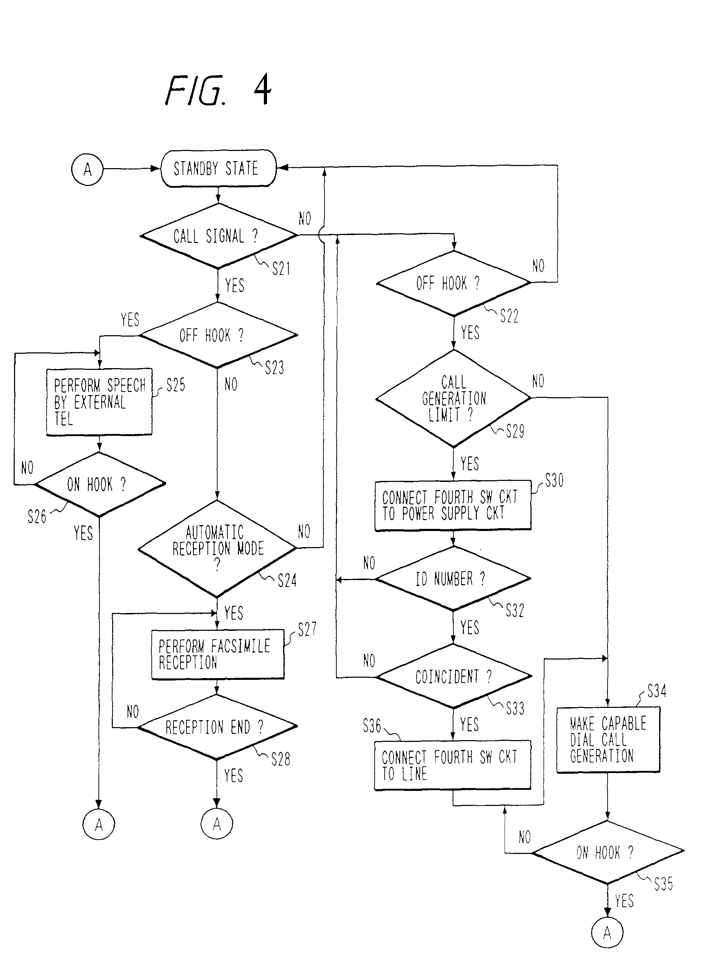

Fig. 4 is a flowchart showing the operation of the embodiment.

First, in the above construction, in the standby state, the first switching circuit 5 switches the lines to the external telephone 1 side as shown in Fig. 3 and the fourth switching circuit 13 is connected to the lines as shown in Fig. 1.

In the registration circuit 10, the outgoing call limiting function is turned on. In the case where the lines are captured (off-hooked) so as to perform the dial call generation from the external telephone 1, the off-hook detection circuit 2 operates.

The control circuit 11 analyzes both of the signal from the off-hook detection circuit 2 and the signal from the call signal detection circuit 4 (S21 to S23).

When the signal of the off-hook detection circuit 2 is valid and the signal from the call signal detection circuit 4 is invalid (S21, S22), the outgoing call limiting function is on (S29). Therefore, the control circuit 11 switches the fourth switching circuit 13 to the power supply circuit 3 side (S30) and disconnects the external telephone 1 from the lines. Thus, the dial call generation cannot be performed (limited).

The reason why the control circuit 11 analyzes the signal from the call signal detection circuit 4 is to judge whether the off-hook from the external telephone 1 is an off-hook for the purpose of the dial call generation or an off-hook to respond to the calling from the exchange. Namely, when the signal from the call signal detection circuit 4 is valid and the signal from the off-hook detection circuit 2 is also valid (S21, S23), the control circuit 11 judges that the off-hook of the external telephone 1 is the off-hook to respond to the calling from the exchange. The apparatus is shifted to the speech mode in a state in which the fourth switching circuit 13 is switched to the external telephone 1 side (S25). The apparatus is returned to the standby mode by on-hooking the external telephone (S26). When the call signal is detected (S21) and the facsimile is in the auto reception mode (S24), the facsimile signal reception is executed (S27). After completion of the signal reception (S28), the apparatus is returned to the standby mode.

In step S30, when the fourth switching circuit 13 is switched to the power supply circuit 3 side and the apparatus is in a state in which the dial call generation from the external telephone 1 is limited, if the external telephone 1 transmits an ID signal (for example, "25" by the dial), the control circuit 11 analyzes the ID number through the ID detection circuit 2 (S32). Such a number is previously registered in the registration circuit 10 as an ID number (password) which can release the dial outgoing call limiting function. When the ID number from the external telephone 1 coincides with the ID number which has previously been registered (S33), the control circuit 11 switches the fourth switching circuit 13 to the external telephone 1 (S36) and connects to the lines, thereby enabling the dial call generation to be performed (S34).

In this case, either one of the mode to temporarily release the outgoing call limiting function (for instance, the dial call generation can be performed only once after the release) and the mode to release until the outgoing call limiting function is again turned on by the registration circuit 10 can be similarly previously selected by the registration circuit 10.

When the external telephone 1 is subsequently on-hooked (S3), the signal of the off-hook detection circuit 2 is made invalid. The control circuit 11 confirms it and is returned to the standby mode.

By using the timer circuit 12 in the construction as mentioned above, the outgoing call limiting function can be automatically turned on or off. For example, when a function such as to turn on the outgoing call limiting function at 8:00 p.m. and to turn off at 7:00 a.m. is registered by the registration circuit 10, the timer circuit 12 detects such times and the control circuit 11 automatically controls the outgoing call limiting operation which has already been described.

By the second embodiment as mentioned above, even when any external telephone is connected, the dial call generation from such a telephone can be limited. The outgoing call limitation can be released and the dial call generation can be executed by transmitting a signal from the telephone.

In the above embodiment, the power supply circuit 3 is electrically isolated from the lines and can supply a power source enough to make the dial function of the external telephone operative.

Although the off-hook detection circuit and ID detection circuit have been shown by the same block, they can be also obviously separately constructed. Further, the ID detection circuit can detect both or one of a DTMF and a pulse dial as a transmission signal of the external telephone.

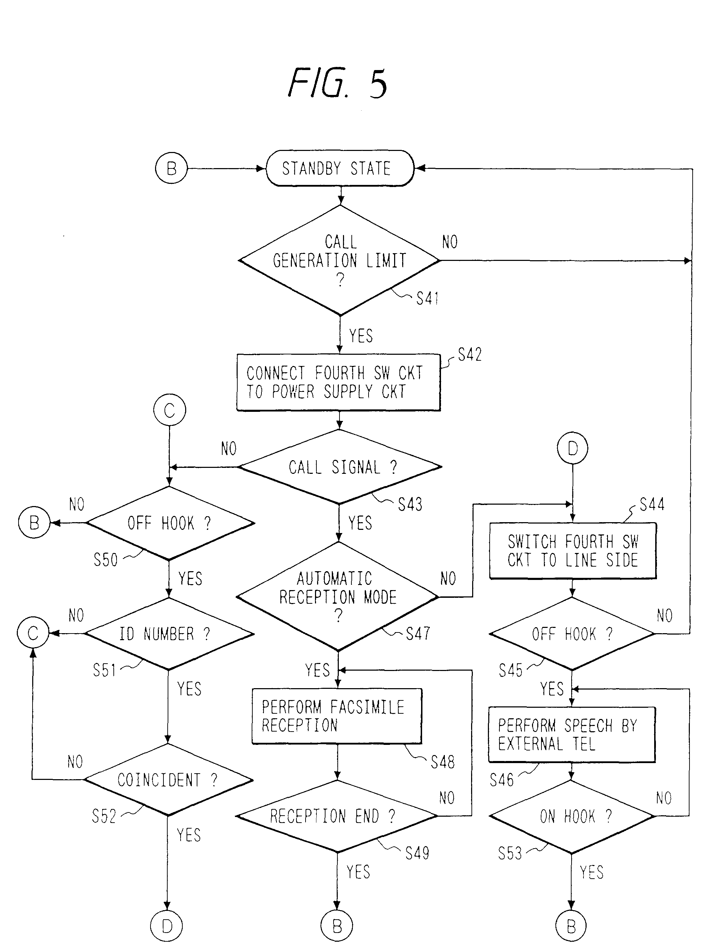

Fig. 5 is a flowchart showing the operation of the third embodiment of the invention. It is assumed that the construction of the apparatus is common to that of the second embodiment (Fig. 3).

Even in the third embodiment, the external telephone 1 is connected to the lines L1 and L2 through the switching circuits 5 and 13 in the standby mode.

In the third embodiment as well, when the outgoing call limiting function is turned on in the registration circuit 10 (S41), the fourth switching circuit 13 is soon switched to the power supply circuit 3 side and the external telephone 1 is disconnected from the lines (S42). When the external telephone 1 is off-hooked and the ID number is transmitted (S50, S51), if the ID number coincides with the registered ID number by the ID detection circuit 2 and control circuit 11 (S52), the fourth switching circuit 13 is connected to the line side, thereby enabling the call generation from the external telephone 1 to be executed (S44).

When the call signal is received from the exchange in a state in which the fourth switching circuit 13 is connected to the power supply circuit 3 side (S43), so long as the facsimile is not set to the auto reception mode (S47), the fourth switching means is again returned to the line side (S44). The external telephone 1 is rung, thereby enabling the lines to be captured by the external telephone 1 (S45 and following).

By the above control, an effect similar to that in the second embodiment is obtained.

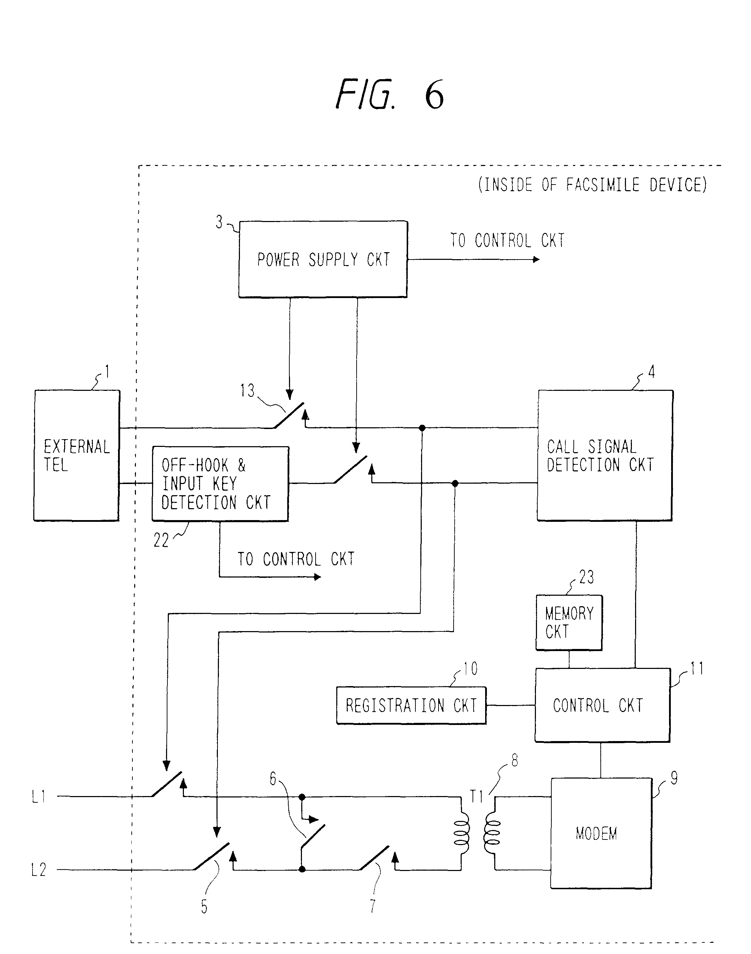

Fig. 6 is a block diagram showing the fourth embodiment of the invention.

For example, in the second embodiment, the outgoing call limitation has been released by inputting the ID number by only the owner of the apparatus.

In the fourth embodiment, therefore, with respect to the specific telephone numbers registered by the owner, the call generation can be performed without executing a special outgoing call limitation releasing operation.

According to the construction shown in Fig. 6, the fourth switching circuit 13 for disconnecting the telephone 1 from the lines and connecting to the power supply circuit 3 is provided in the construction shown in Fig. 1 of the first embodiment and a memory circuit 23 for holding the telephone numbers is also provided.

An off-hook detection and input key detection circuit 22 corresponding to the off-hook detection and ID detection circuit 2 is further provided.

The registration circuit 10 includes auto-dial keys such as one-touch dial keys, abbreviation dial keys, etc. and ten-key.

The modem 9 has a DTMF transmitting function. Since the other constructions are common to those in Fig. 1, they are designated by the same reference numerals and their descriptions are omitted.

In the embodiment as well, the external telephone 1 is connected to the lines L1 and L2 through the switching circuits 5 and 13 in the standby mode.

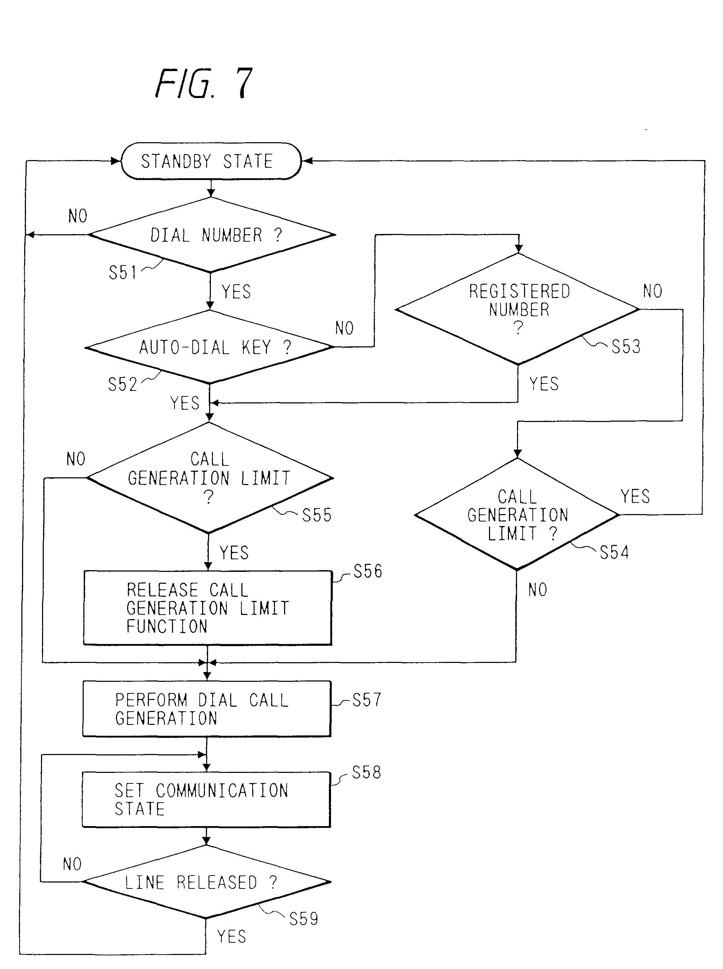

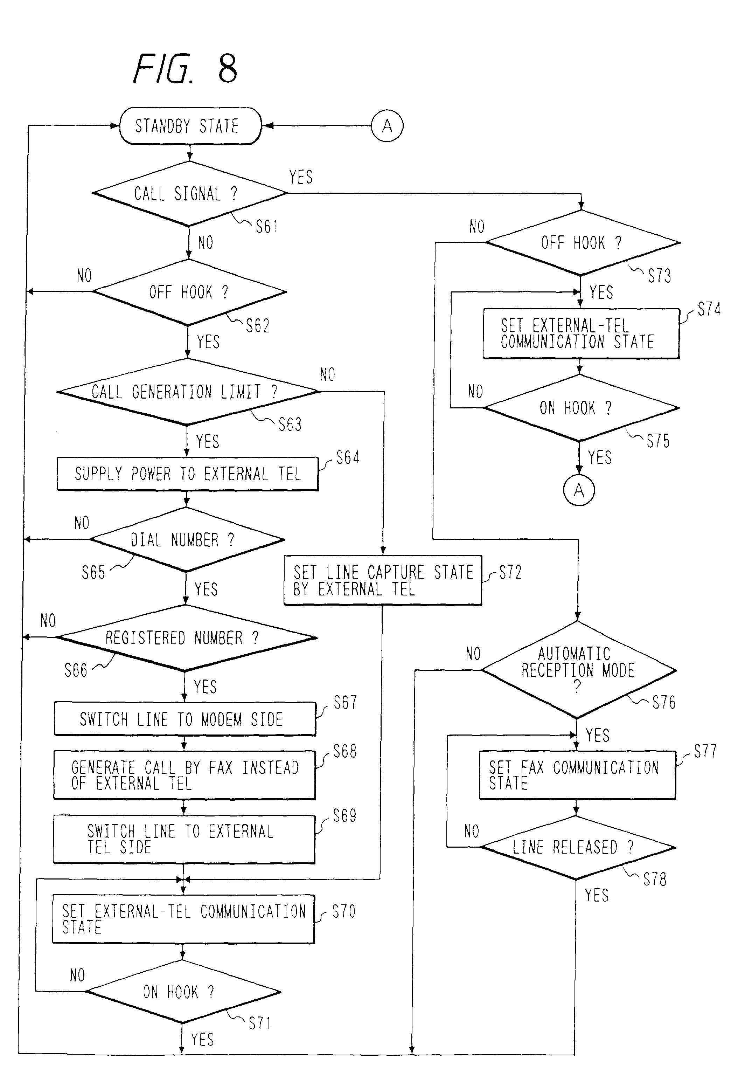

Figs. 7 and 8 are flowcharts showing the operation of the embodiment.

First, in Fig. 7, the operation in the case where the apparatus is in a state in which the dial call generation from the facsimile main body is limited. When the telephone number from a second key input unit (display) 10A of the registration circuit 10 (S51), so long as it is not the auto dial key (S52), the control circuit 11 compares the inputted telephone number and the telephone numbers which have been registered in the memory circuit 23 (S53).

If there is the coincident telephone number, the outgoing call limiting function is released (S55, S56) and the dial call generation is performed. In case of the auto dial key (S52), the outgoing call limiting function is released as it is (S55, S56). The first switching circuit 5 is switched, the lines L1 and L2 are connected to the modem 9 side, and the dial call generation is executed (S57).

The apparatus enters a communication state (S58). By releasing the lines (S59), the apparatus is returned to the standby mode.

When there is no coincident telephone number in step S53, if the outgoing call limiting function is off, the dial call generation is executed (S57). When the outgoing call limiting function is on, the apparatus is returned to the standby mode.

In Fig. 8, the case where the external telephone 1 having the call generating function is connected and the call generating function is limited will now be described.

First, when the external telephone 1 is off-hooked, the detection signal is outputted from the off-hook detection circuit 2 to the control circuit 11 (S62, S73). The control circuit 11 confirms the output signal from the call signal detection circuit 4 (S61).

The reason why the control circuit 11 analyzes the signal from the call signal detection circuit 4 is to judge whether the off-hook from the external telephone 1 is an off-hook for the purpose of the dial call generation or an off-hook to respond to the calling from the exchange. Namely, in the case where the signal from the call signal detection circuit 4 is invalid and the signal from the off-hook detection circuit 2 is valid, the control circuit 11 judges that the off-hook of the external telephone 1 is the off-hook for the purpose of the dial call generation.

When the off-hook of the external telephone is the off-hook to respond to the calling from the exchange, the apparatus is shifted as it is to the communication state by the external telephone 1 (S73 to S75).

when the external telephone 1 is off-hooked for the purpose of the dial call generation (S62), so long as the outgoing call limiting function is on (S63), the control circuit 11 controls the fourth switching circuit 13, thereby connecting the external telephone 1 to the power supply circuit 3 (S64). When the telephone number is inputted from the external telephone 1 (S65), the input key detection circuit 22 detects it and outputs to the control circuit 11. The control circuit 11 compares the telephone number from the input key detection circuit 22 and the telephone numbers which have already been registered and held in the memory circuit 23 by the registration circuit 10 (S66).

Thus, when the coincident telephone number exists, the control circuit 11 switches the first switching circuit 5 to the modem 9 side (S67). When the dial mode of the line is set to the pulse, the second switching circuit 7 is opened and the dial pulse is generated by using the third switching circuit 6. When the dial mode of the line is set to DTMF (tone), the second switching circuit 7 is closed and the third switching circuit 6 is opened. The DTMF is generated from the modem 9.

In the case where the coincident telephone number exists, as mentioned above, the first switching circuit 5 is switched to the modem 9 side and the facsimile main body performs the dial call generation in place of the external telephone 1 (S68). After completion of the generation of the dial, the control circuit 11 switches the fourth switching circuit 13 to the line side and, after that, switches the first switching circuit 5 to the external telephone 1 (S69). The external telephone 1 is in the off-hook state. Further, the switching time of the first switching circuit 5 is set to a short time as much as possible in order to prevent the disconnection of the line. Thus, the speech by the external telephone 1 can be performed (S70, S71).

On the other hand, when the coincident telephone number doesn't exist in the memory circuit 23, the control circuit 11 continues the outgoing call limiting function of the external telephone 1.

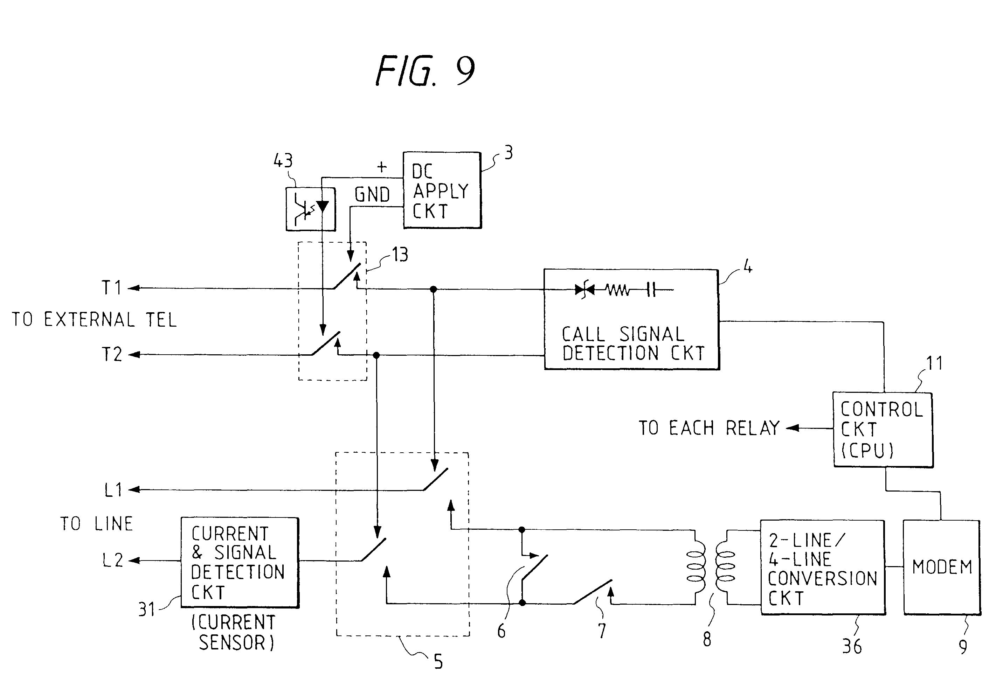

Fig. 9 is a block diagram showing the fifth embodiment of the invention.

A current and signal detection circuit (current sensor) 31 detects the line current and the signal on the line. The CML relay 5 switches the lines to the modem 9 side or external telephone side. The P relay 6 is a relay to generate a pulse dial. The S relay 7 is a relay to disconnect the subsequent circuits during the operation.

The transformer 8 is a transformer to separate the lines L1 and L2 (primary side) from the secondary side. A 2-line/4-line conversion circuit 36 is a circuit for converting between the 2-line signal and the 4-line signal in order to separate/multiplex a transmission system signal and a reception system signal.

The modem 9 modulates and demodulates the transmission and reception signals. The control circuit 11 controls each hardware in accordance with a software in a built-in ROM. The detection circuit 4 detects the call signal which is sent from the exchange. The DC (direct current) apply circuit 3 detects the off-hook when the external telephone is disconnected from the line.

The H relay 13 switches the connection of the external telephone to the lines or DC applying side. A photocoupler 43 for detection of an off-hook detects a current when the DC voltage is being applied to the external telephone or when the telephone is off-hooked.

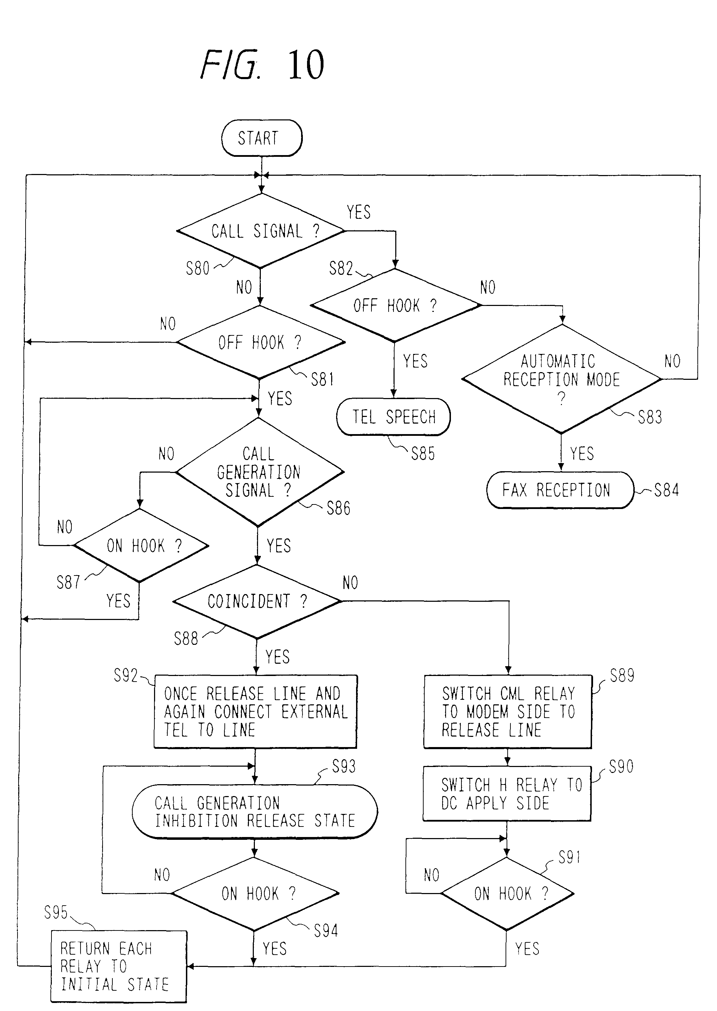

Fig. 10 is a flowchart showing a software to control the hardware in the embodiment.

In the standby mode, the CML relay 5 and H relay 13 are set so as to connect the lines L1 and L2 to the telephone.

First in step S80, a check is made to see if the call signal has been detected or not. If the call signal is not detected, the off-hook of the external telephone is detected in step S81. Since the external telephone is connected to the lines through the relays 5 and 13, the off-hook is detected by the current sensor 31.

When the call signal is detected in step S80, a check is made in step S82 to see if the off-hook has been detected or not. When the off-hook is not detected and the facsimile apparatus itself is in the auto reception mode (S83), the processing routine advances to the reception in step S84. When the facsimile apparatus is in the manual reception mode, the external telephone continuously rings.

When the call signal is detected by the call signal detection circuit 4 in step S80 and the off-hook of the external telephone is detected in step S82, it is judged that the off-hook relates to the response by the telephone, so that a speech by the telephone in step S85 is executed.

When the call signal is not detected in step S80, the off-hook of the external telephone in step S81 is the off-hook for the purpose of the dial call generation. The dial signal which is call generated is detected in step S86. The on-hook of the external telephone is also detected in step S87 for a period of time during which the dial signal is not detected. The on-hook in this instance is detected by the current sensor 31. When the on-hook is detected, the apparatus is returned to the standby mode.

When there is a dial signal from the external telephone in step S86, a check is made to see if the signal coincides with the ID number (for instance, *25 or the like) which has already been registered or not in step S88. The ID number can be arbitrarily set. As a dial signal, both of the pulse and the DTMF can be detected.

When the signal doesn't coincide with the ID number, the CML relay 5 is switched to the modem 9 side in step S89 and the external telephone is disconnected from the lines, thereby setting the apparatus into the dial call generation impossible (inhibition) state. In this instance, it is assumed that the P relay 6 and S relay 7 are open (unless otherwise, the lines are closed).

Subsequently, the H relay 13 is switched to the DC apply circuit 3 in step S90 and the power source is supplied to the external telephone. The on-hook of the external telephone is detected by using the photocoupler 43 in step S91.

As mentioned above, by detecting the off-hook and on-hook of the external telephone when the DC voltage is applied by using the cheap photocoupler, the costs can be reduced.

When it is detected in step S91 that the external telephone has been on-hooked, each relay is set into an initial state in step S95 and the apparatus is again returned to the standby mode.

when the CPU 11 compares the dial signal detected by the current sensor 31 and the ID number and when they coincide in step S88, the processing routine advances to step S92. The CML relay 5 is once switched to the modem 9 side for a few seconds and the line open state is formed. The CML relay 5 is again returned to the external telephone side and the lines are again connected. Similar operations can be also performed by using the H relay 13 in place of the CML relay 5.

The call generation inhibition state is released in step S93 and the dial call generation can be performed. In this case as well, the on-hook of the external telephone is also monitored by using the current sensor 31 in step S94. When the on-hook is detected, each relay is set into an initial state in step S95 and the apparatus is returned to the standby mode.

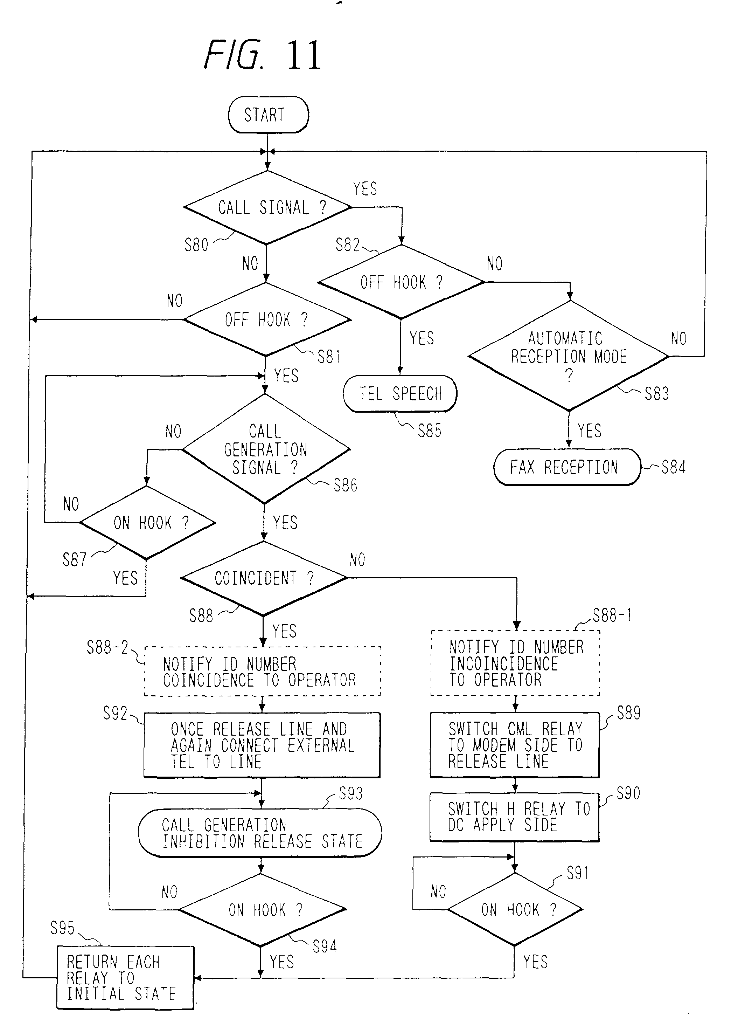

Fig. 11 is a flowchart showing the operation of the sixth embodiment of the invention. In the flowchart of Fig. 11, same processing steps as those shown in Fig. 10 are designated by the same step numbers. Therefore, steps S88-1 and S88-2 shown by broken lines relate to the newly added functions in the sixth embodiment.

In Fig. 11, when the dial signal which was call generated by the external telephone differs from the ID number in step S88, such a fact is informed to the operator in step S88-1. When it coincides with the ID number, such a fact is similarly informed to the operator in step S88-2.

To inform such an information, it is sufficient to generate a voice message or to light on an LED or the like in the facsimile main body. By such added functions, the call generation inhibiting function which can be further easily handled by the operator can be realized.

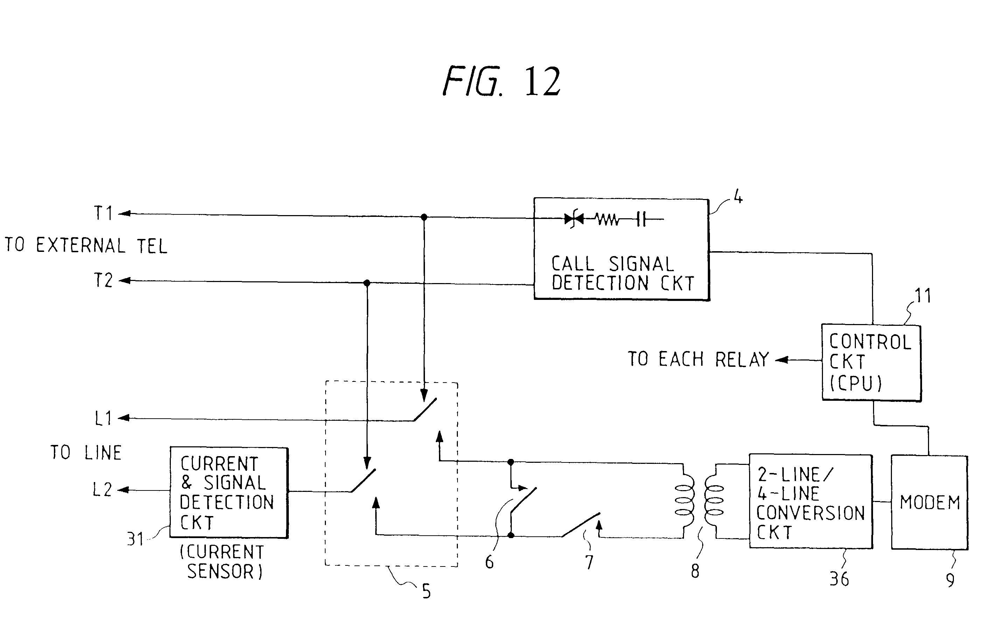

Fig. 12 is a block diagram showing the seventh embodiment of the invention.

The seventh embodiment is constructed by omitting the DC apply circuit 3, H relay 13, and photocoupler 43 from the fifth embodiment.

The seventh embodiment is similar to the fifth embodiment with respect to a point that the outgoing call limitation and its release can be performed and there is also a large advantage in terms of the costs.

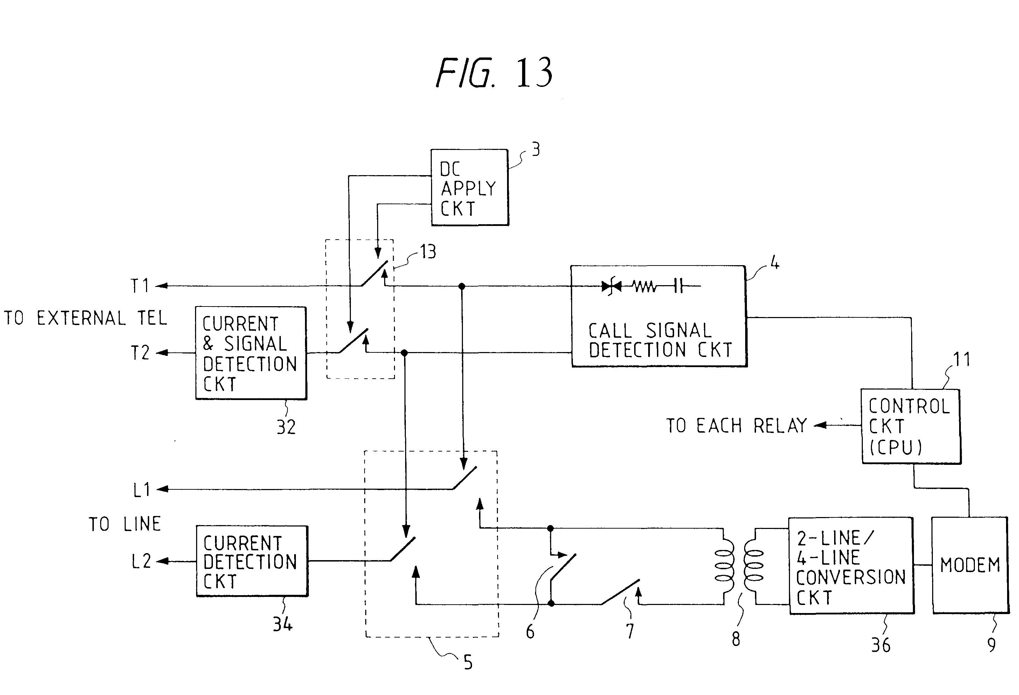

Fig. 13 is a block diagram showing the eighth embodiment of the invention. In the embodiment, a line current and signal detection circuit 32 is provided between the H relay 13 and the external telephone and detects a current and a signal, thereby limiting the call generation of the external telephone and call generating the ID number in a state in which the DC voltage is applied to the external telephone. When the ID number is correct, the call generation limitation state is released and the external telephone is connected to the lines.

In the embodiment, the current sensor is used to detect the current and signal.

In the above circuit construction of Fig. 13, a current detection circuit 34 is newly provided in order to judge an abnormality of the lines by detecting the line current in the case where the CML relay 5 is switched to the modem 9 side.

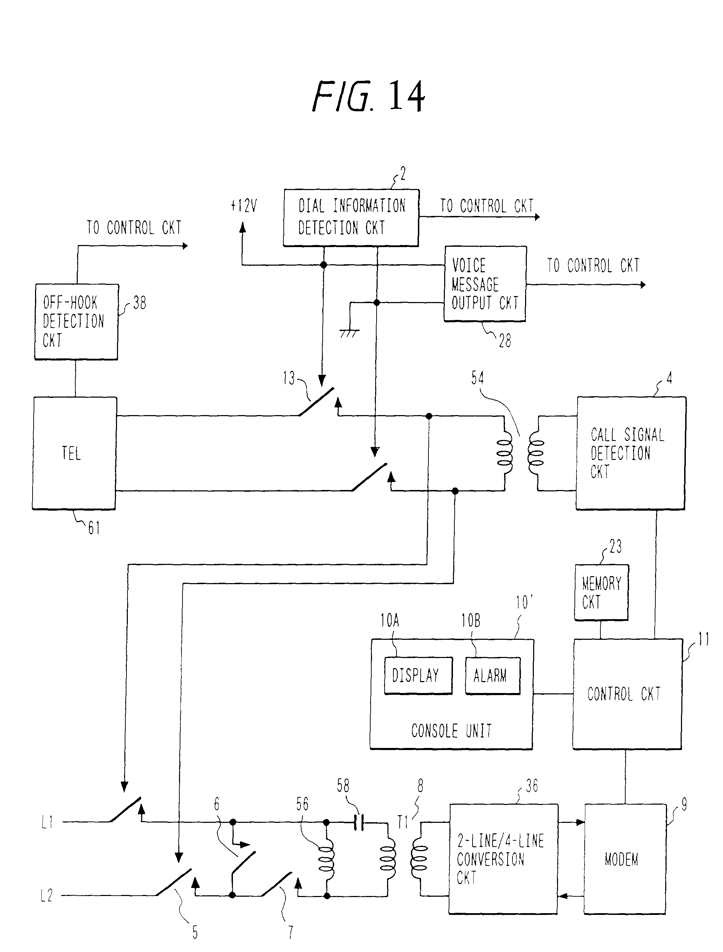

First, the ninth embodiment of the invention will now be described with reference to Figs. 14 to 17. Fig. 14 is a block diagram showing a construction of a facsimile apparatus according to the ninth embodiment of the invention. In the diagram, the facsimile apparatus has the CML relay 5. When the relay 5 is turned on, the telephone lines L1 and L2 are connected to the modem 9 side. When the CML relay is turned off, the telephone lines L1 and L2 are connected to a telephone 61 side.

When the H relay 13 is turned on, the telephone 61 is connected to the dial information detection circuit 2 and the telephone 61 is connected to the CML relay 5 side. When the H relay 13 is on, a predetermined voltage (for example, +12 V) is applied to the telephone 61 even during the communication and the off-hook of the telephone 61 can be detected. When the H relay 13 is on, a selection signal from the telephone 61 is not sent to the lines and the call generating operation is not performed.

Reference numeral 38 denotes an off-hook detection circuit for detecting the off-hook of the telephone 61. The off-hook detection circuit 8 outputs an off-hook detection signal to the control circuit 11.

To judge whether the telephone is in the off-hook state or not, the DC voltage or a DC voltage from the exchange (not shown) is applied to the telephone 61. When the telephone is off-hooked, a termination DC resistance of the telephone 61 decreases (for example, about 200 Ω) and a current flows. The dial information detection circuit 2 detects the dial information that is outputted from the telephone 61 when the H relay 13 is on. The detected dial information is supplied to the control circuit 11. Reference numeral 56 denotes an RET coil for capturing a DC loop; 58 a capacitor to cut out a direct current; and 54 and 8 transformers for separating the primary and secondary voltages; and 7 the S relay.

The reception signal detection circuit 4 receives the signals from the telephone lines L1 and L2 and detects the reception signal. The reception signal detection circuit 4 outputs the reception signal to the control circuit 11. The P relay 6 transmits the telephone number information that is outputted from the control circuit 11 to the telephone lines L1 and L2 as a selection signal (DC impulse signal). In the case where the call generation is selected by an operation of a console unit 10' (including the ten-key, abbreviation dial keys, and one-touch dial keys), the selection signal is outputted from the P relay 6 to the telephone lines. The information inputted from the console unit 10' is inputted to the control circuit 11.

Reference numeral 36 denotes a hybrid circuit for separating the signals of the transmission system and the reception system. Namely, the transmission signal of the modem 9 is sent to the telephone lines L1 and L2 through the transformer 8. The signal sent from the partner side is outputted to the modem 9 through the transformer 8.

The modem 9 modulates transmission information that is outputted from the control circuit 11 or a reader (not shown) and supplies to the hybrid circuit 36. The modem 9 also demodulates reception information that is outputted from the hybrid circuit 36 and supplies to the control circuit 11 or a printer (not shown). As a modulating and demodulating method, V.21, V.27, V.29, V.17, V.fast, etc. is considered.

The modem 9 has a DTMF outputting function and outputs the telephone number information generated from the control circuit 11 to the telephone lines L1 and L2 as a DTMF signal. The DTMF signal is transmitted from the modem 9 in case of outputting the selection signal from the facsimile apparatus in a manner similar to the case of transmitting the selection signal from the P relay 6 as mentioned above. Specifically speaking, the DTMF signal is transmitted in the case where the call generation is selected by the operation of the ten-key, abbreviation dial key, or one-touch dial key of the console unit 10'. It is also possible to construct in a manner such that a DTMF output circuit is provided in addition to the modem 9 and the modulated output of the modem 9 and the DTMF output are added and the resultant output is inputted to the hybrid circuit 36.

Reference numeral 28 denotes a voice message output circuit for generating a voice message indicative of the call generating operation inhibition state such as "The apparatus is now in a call generating operation inhibition state. Please input the ID number." to the telephone 61 when an output command is generated from the control circuit 11. The console unit 10' includes a display 10A to display a message indicative of the call generating operation inhibition state in accordance with an instruction from the control circuit 11 and an alarm 10B for generating an alarm indicative of the call generating operation inhibition state.

The console unit 10' has: a key to register a specific dial to permit the call generating operation; a key for setting a call generating operation allowance state and a call generating operation inhibition state; a key for setting the ID number which is used when setting a call generating operation allowance time and a call generating operation inhibition time; a key for setting the call generating operation allowance time; a key for setting the call generating operation inhibition time; other function keys; and the like. Information inputted by the depression of each key is supplied to the control circuit. The memory circuit 23 registers the ID number that is used when the call generating operation allowance state and the call generating operation inhibition state mentioned above are set, when a specific dial to permit the call generating operation is registered, and when the call generating operation allowance time and the call generating operation inhibition time are set, respectively.

Even in the call generating operation inhibition state, the memory circuit 23 also registers the specific dial to permit the call generating operation, call generating operation allowance state, or call generating operation inhibition state. Further, the memory circuit 23 registers the time at which the call generating operation is permitted and the time at which the call generating operation is inhibited by a 24-hour method. Such times are registers as a time within a range from (00 : 00) to (23 : 59). After the elapse of the allowance time, the call generating operation is permitted. After the elapse of the inhibition time, the call generating operation is inhibited. The control circuit 11 mainly executes the following controls. Namely, in the facsimile apparatus which can limit the call generating operation in the call generating operation inhibition state, the call generation from the facsimile apparatus main body (specifically speaking, call generation by the operation of the ten-key, abbreviation dial key, one-touch dial key, redial key, or the like in the console unit 10') and the call generation from the telephone 61 connected to the facsimile apparatus main body is inhibited. In the call generating operation allowance state, both of the call generation from the facsimile apparatus main body and the call generation from the telephone 61 connected to the facsimile apparatus main body are permitted.

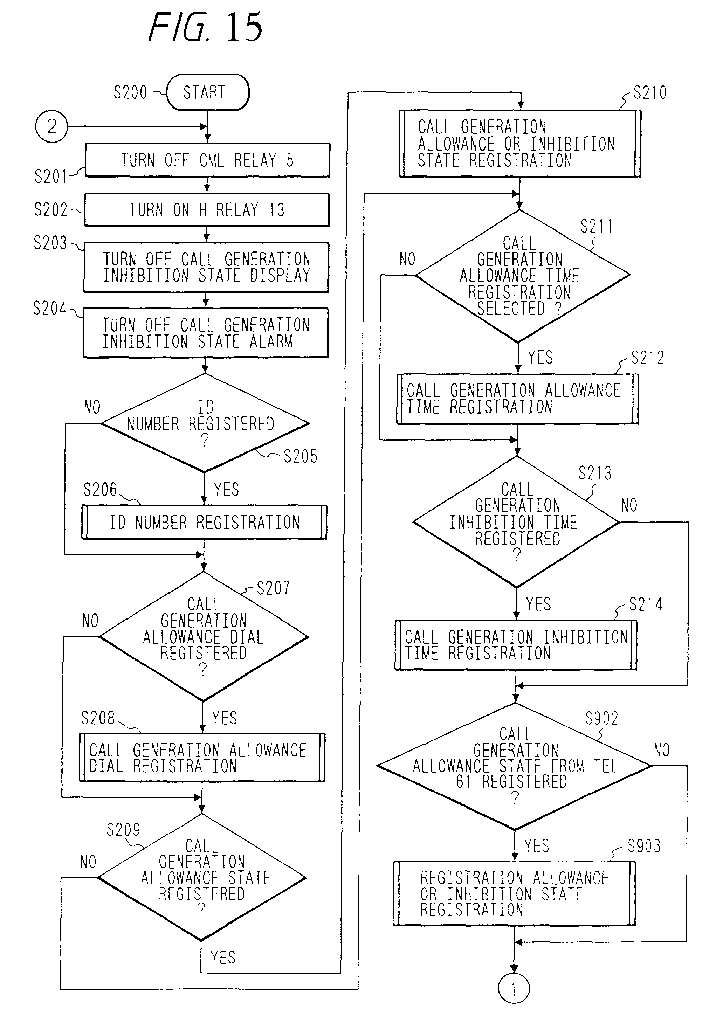

The operation of the facsimile apparatus according to the embodiment with the above construction will now be described with reference to Figs. 14 and 15 to 17. Figs. 15 to 17 are flowcharts showing control procedures which are executed by the control circuit 11 in the facsimile apparatus in Fig. 14.

In Fig. 15, step S200 denotes the start of the control operation. Steps S201 to S204 denote the initialization. When the control operation is started in step S200, the CML relay 5 is first turned off in step S201 and the telephone lines L1 and L2 are connected to the H relay 13 side. In step S202, the H relay 13 is turned on and the telephone 61 is connected to the telephone lines L1 and L2. In step S203, the call generation inhibition state display and the call generation inhibition state alarm in the console unit 10' are turned off.

Steps S205 to S214 show registering processes of the ID number, call generating operation allowance state, call generating operation inhibition state, dial to inhibit the call generating operation in the call generating operation inhibition state, call generating operation allowance time, and call generating operation inhibition time.

In step S205 in Fig. 15, the information from the console unit 10' is inputted and a check is made to see if the registration of the ID number has been selected or not. When the registration of the ID number is selected, step S206 follows. The ID number is registered into the memory circuit 23. After that, the processing routine advances to step S207. In case of changing the ID number, after confirming that the ID number which has already been registered was once inputted, the change is permitted. When the registration of the ID number is not selected in step S205, step S206 is skipped and step S207 follows.

In the case where the information from the console unit 10' has been inputted and the call generation inhibition state has been registered in the memory circuit 23, a check is made in step S207 to see if the registration of the dial to permit the call generating operation has been selected or not. When the registration of the dial to permit the call generating operation is selected, step S208 follows. After confirming that the ID number was inputted from the console unit 10', the dial to permit the call generating operation is first registered into the memory circuit 23. After that, step S209 follows. On the other hand, when the registration of the dial to permit the call generating operation is not selected in step S207, step S208 is skipped and step S209 follows.

In step S209, the information from the console unit 10' is inputted and a check is made to see if the registration of the call generating operation allowance state has been selected or not. When the registration of the call generating operation allowance state is selected, step S210 follows. First, after confirming that the ID number was inputted from the console unit 10', the call generating operation allowance state or call generating operation inhibition state is registered into the memory circuit 23. After that, step S211 follows. When the registration of the call generating operation allowance state is not selected in step S209, step S210 is skipped and step S211 follows.

In step S211, the information from the console unit 10' is inputted and a check is made to see if the registration of the call generating operation allowance time has been selected or not. When the registration of the call generating operation allowance time is selected, step S212 follows. First, after confirming that the ID number was inputted from the console unit 10', the call generating operation allowance time is registered into the memory circuit 23. Then, step S213 follows. When the registration of the call generating operation allowance time is not selected in step S211, step S212 is skipped and step S213 follows.

In step S213, the information is inputted from the console unit 10' and a check is made to see if the registration of the call generating operation inhibition time has been selected or not. When the registration of the call generating operation inhibition time is selected, step S214 follows. First, after confirming that the ID number was inputted from the console unit 10', the call generating operation inhibition time is registered into the memory circuit 23. Then, step S902 follows. When the registration of the call generating operation inhibition time is not selected in step S213, step S214 is skipped and step S902 follows.

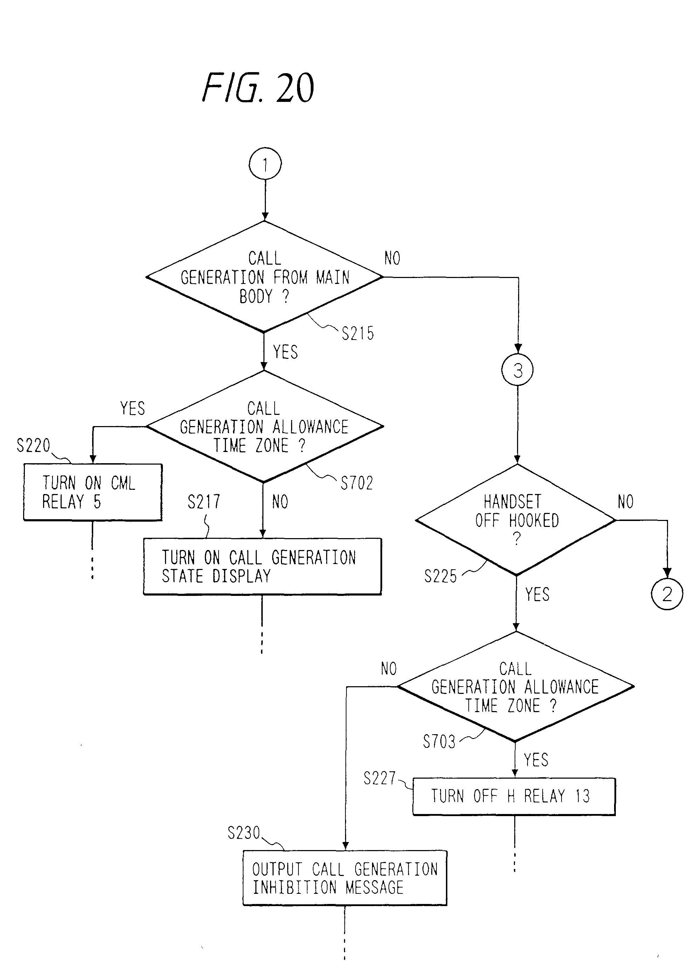

In step S902, the output of the dial information detection circuit 2 is inputted and a check is made to see if the registration of the call generating operation allowance state has been selected from the telephone 61 or not. When the registration of the call generating operation allowance state is selected, step S903 follows. After confirming that the ID number was inputted from the telephone 61, the call generating operation allowance state or call generating operation inhibition state is first registered into the memory circuit 23. After that, step S215 in Fig. 20 follows. When the registration of the call generating operation allowance state is not selected in step S902, step S903 is skipped and step S215 follows.

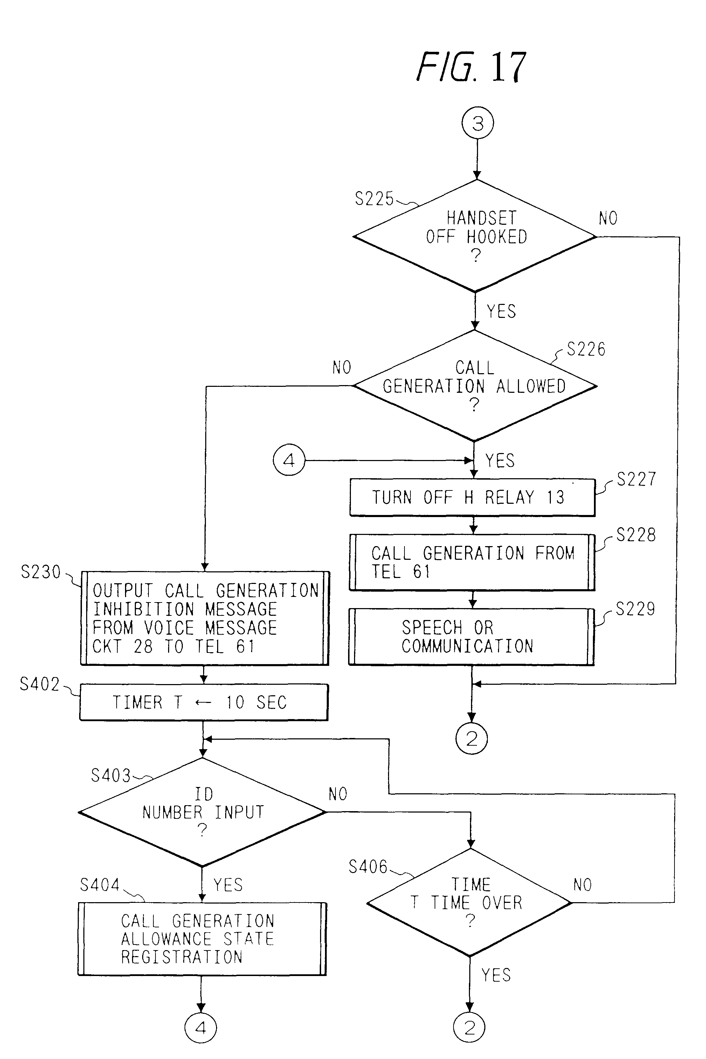

In step S215, a check is made to see if the call generation from the facsimile apparatus main body has been selected or not, specifically speaking, a check is made to see if the call generation has been selected by the operation of the ten-key, abbreviation dial key, one-touch dial key, redial key, or the like of the console unit 10' or not. When the call generation from the facsimile apparatus main body is selected, step S216 follows. When the call generation from the facsimile apparatus main body is not selected, the processing routine advances to step S225 in Fig. 17, which will be explained hereinlater. The judgment in step S215 is performed by inputting the information from the console unit 10'.

In step S216, the call generation allowance/inhibition information registered in the memory circuit 23 is inputted and a check is made to see if the operating state is the call generating operation allowance state or not. When it is the call generating operation inhibition state, step S217 follows. When it is the call generating operation allowance state, the processing routine advances to step S220, which will be explained hereinlater.

In step S217, the console unit 10' allows the call generation inhibition state to be displayed. Step S218 follows and an alarm indicative of the call generation inhibition is generated. Step S219 follows and the apparatus waits (standby) for 30 seconds. The alarm indicative of the call generation inhibition state is generated for 30 seconds. After that, the processing routine is returned to step S201 in Fig. 15.

When the operating state is the call generating operation allowance state in step S216, the CML relay 5 is turned on and the telephone lines L1 and L2 are connected to the modem 9 side. Step S221 follows and a check is made to see if the output by the DTMF has been selected or not. When the output by the DTMF is selected, step S222 follows and the DTMF signal is supplied to the telephone lines L1 and L2 by the modem 9. Step S223 follows and a facsimile communication or a speech is executed. After that, the processing routine is returned to step S201 in Fig. 15. When the transmission of the selection signal by the DC impulse has been selected in step S221, step S224 follows and the DC impulse signal is outputted to the telephone lines L1 and L2 by the P relay 6. Subsequently, the processing routine is returned to step S223.

When the call generation from the facsimile apparatus main body is not selected in step S215, step S225 in Fig. 17 follows. The output of the off-hook detection circuit 38 is inputted and a check is made to see if the handset of the telephone 61 has been off-hooked or not. When the handset is not off-hooked, the processing routine is returned to step S201 in Fig. 15. When the handset is off-hooked, step S226 follows.

In step S226, the call generation allowance/inhibition information registered in the memory circuit 23 is inputted and a check is made to see if the operating state is the call generating operation allowance state or not. When it is the call generating operation allowance state, step S227 follows. The H relay 13 is turned off, namely, the telephone 61 is connected to the telephone lines L1 and L2 and the selection signal that is outputted from the telephone 61 is sent to the telephone lines L1 and L2. Step S228 follows and the call generation from the telephone 61 is executed. In step S229, the facsimile communication or speech is executed. After that, the processing routine is returned to step S201 in Fig. 15.

When the operating state is the call generating operation inhibition state in step S226 in Fig. 17, step S230 follows. A voice message indicative of the call generating operation inhibition is generated from the voice message output circuit 28, thereby enabling the operator of the telephone 61 to hear such a message. After that, step S402 follows. A predetermined value, for example, 10 seconds is set into a timer T. Step S403 follows and the output of the dial information detection circuit 2 is inputted and a check is made to see if the ID number has been inputted from the telephone 61 or not. When the ID number is inputted from the telephone 61, step S404 follows and the call generating operation allowance state is registered into the memory circuit 23. After that, step S227 follows and the H relay 13 is turned off. Subsequently, the dial call generation from the telephone 61 is permitted.

When the ID number is not inputted from the telephone 61 in step S403, step S406 follows and a check is made to see if the timer T has timed over or not. When the timer T times over, the processing routine is returned to step S201 in Fig. 15. When the timer T doesn't time over, the processing routine is returned to step S403.

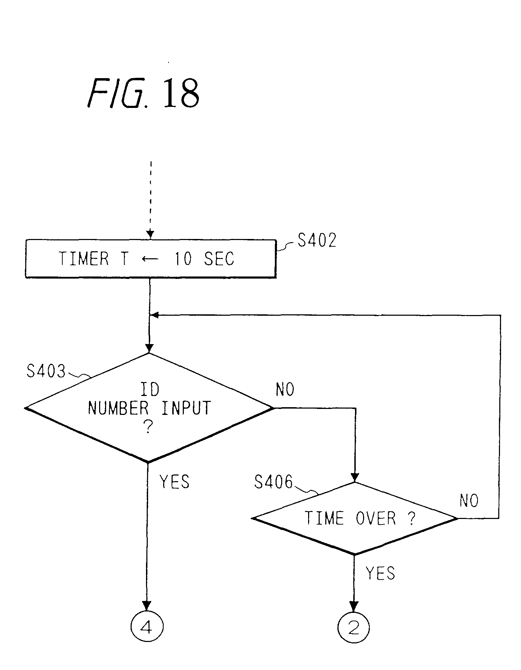

The tenth embodiment of the invention will now be described with reference to Fig. 18. In the ninth embodiment mentioned above, after the voice message indicative of the call generating operation inhibition state was generated from the voice message output circuit 28, if the ID number is inputted from the ten-key of the telephone 61 within a predetermined time (for example, 10 seconds), the call generating operation is permitted for only the present call generation. There is no need to set the call generating operation allowance state into the call generation allowance/inhibition state registration circuit 46. Fig. 18 shows a specific example of a control procedure in such a case. Fig. 18 is a flowchart showing a control procedure of portions different from those in Fig. 17 mentioned above.

In case of the embodiment, the process in step S404 in Fig. 17 is omitted. That is, when the ID number is inputted from the ten-key of the telephone 61 in step S403 in Fig. 18, the processing routine advances to step S227 in Fig. 17 and the H relay 13 is turned off. After that, the dial call generation from the telephone 61 is permitted.

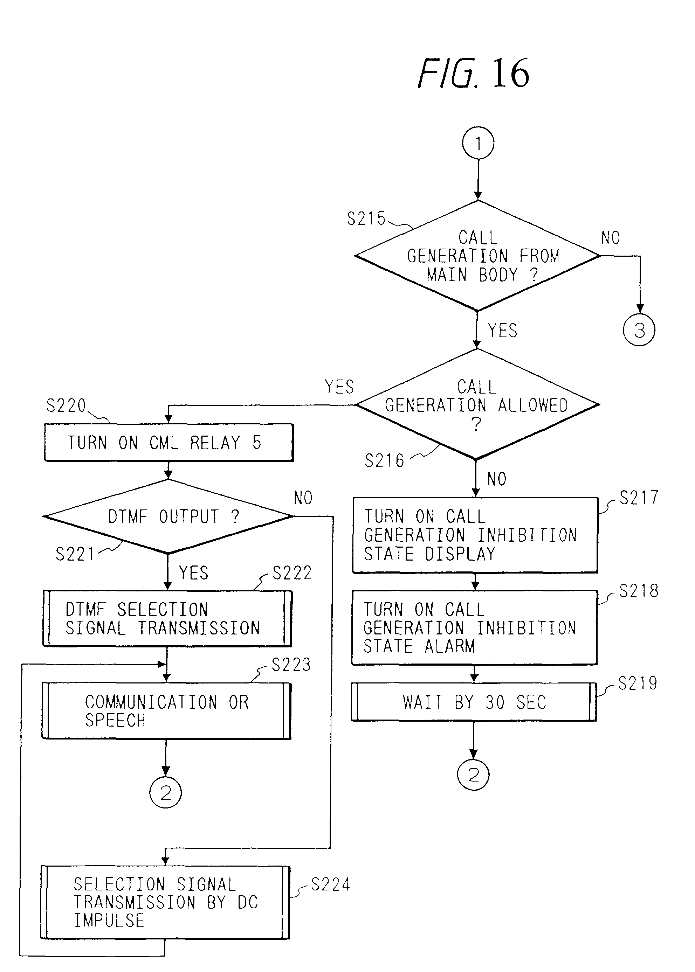

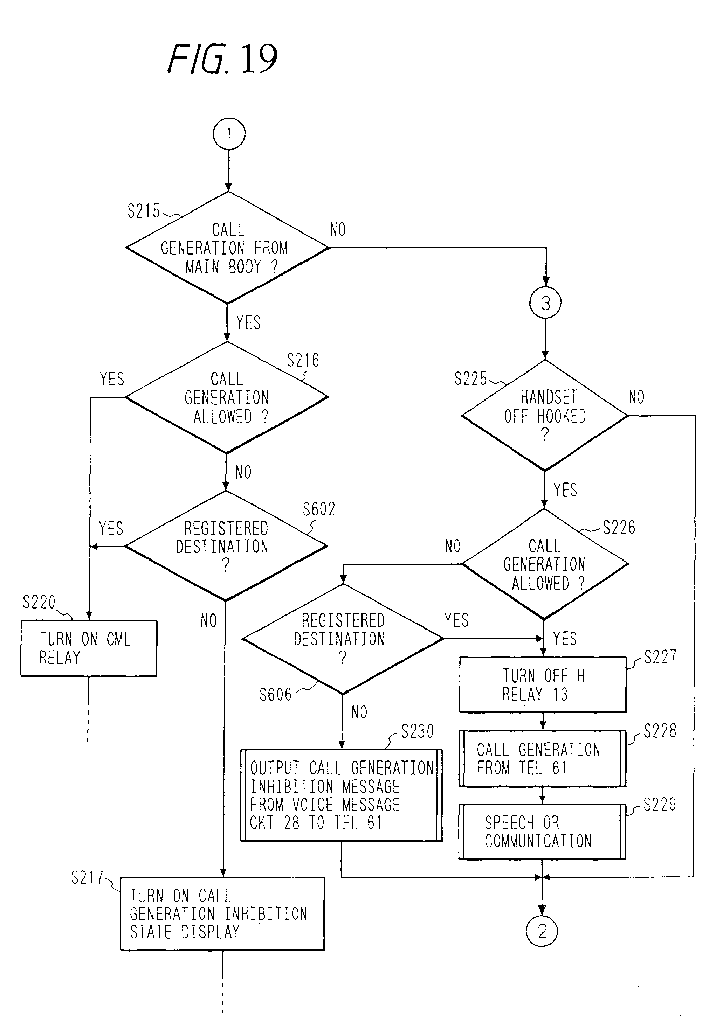

The eleventh embodiment of the invention will now be described with reference to Fig. 19. For the construction of the above ninth embodiment, in place of the ID number, the call generation can be also performed in the case where the dial to the telephone number to permit the call generating operation is selected even in the call generating operation inhibition state. In the call generating operation inhibition state, when the call generation to a telephone number other than the telephone number in which the call generating operation is permitted is selected, such a fact can be also informed. Fig. 19 shows a specific example of a control procedure in such a case. Fig. 19 is a flowchart showing a control procedure of portions different from Figs. 16 and 17 mentioned above.

In step S216 in Fig. 19, the information registered in the memory circuit 23 is inputted and when the operating state is not the call generating operation allowance state, step S602 follows. The call generation allowance dial information registered in the memory circuit 23 is inputted and a check is made to see if it indicates the destination which permits the call generating operation or not. When it indicates the destination which permits the call generating operation, step S220 follows and the CML relay 5 is turned on. When it doesn't indicate the destination which permits the call generating operation, step S217 follows and the call generation inhibition state is displayed.

In step S226 in Fig. 19, the call generation permission/inhibition information registered in the memory circuit 23 is inputted and when the operating state is not the call generating operation allowance state, step S606 follows. The call generation allowance dial information registered in the memory circuit 23 is inputted and a check is made to see if it indicates the destination which permits the call generating operation or not. When it indicates the destination which permits the call generating operation, step S227 follows and the H relay 13 is turned off. After that, the dial call generation from the telephone 61 is permitted. When it doesn't indicate the destination which permits the call generating operation, step S230 follows and a voice message indicative of the call generating operation inhibition state is outputted from the voice message output circuit 28 to the handset of the telephone 61.

The twelfth embodiment of the invention will now be described with reference to Fig. 20. For the construction of the ninth embodiment mentioned above, it is also possible to construct in a manner such that the call generating operation is permitted for a period of time from the call generating operation allowance time to the call generating operation inhibition time and the call generating operation is inhibited for a period of time from the call generating operation inhibition time to the call generating operation allowance time. Fig. 20 shows a specific example of a control procedure in such a case. Fig. 20 is a flowchart showing a control procedure of portions different from Figs. 16 and 17 mentioned above. Step S216 in Fig. 16 and step S226 in Fig. 17 are changed to steps S702 and S703 in Fig. 20.

In step S701, when the call generation is selected by the operation of the ten-key, abbreviation dial key, one-touch dial key, or the like of the console unit 10' in steps S215 and S225 or when the handset of the telephone 61 is off-hooked, steps S702 and 703 follow. In steps S702 and S703, the information of the call generation allowance time to the call generation inhibition time which have been registered in the memory circuit 23 is inputted, respectively, and a check is made to see if the present time lies within a range from the call generation allowance time and the call generation inhibition time or not. When the present time lies within the range from the call generation allowance time to the call generation inhibition time, the processing routine advances to steps S220 and S227. The CML relay 5 is turned on or the H relay 13 is turned off. When the present time is out of the range from the call generation inhibition time to the call generation allowance time, steps S217 and S230 follow. The call generation inhibition state is displayed or a voice message indicative of the call generating operation inhibition state is generated from the voice message output circuit 28.

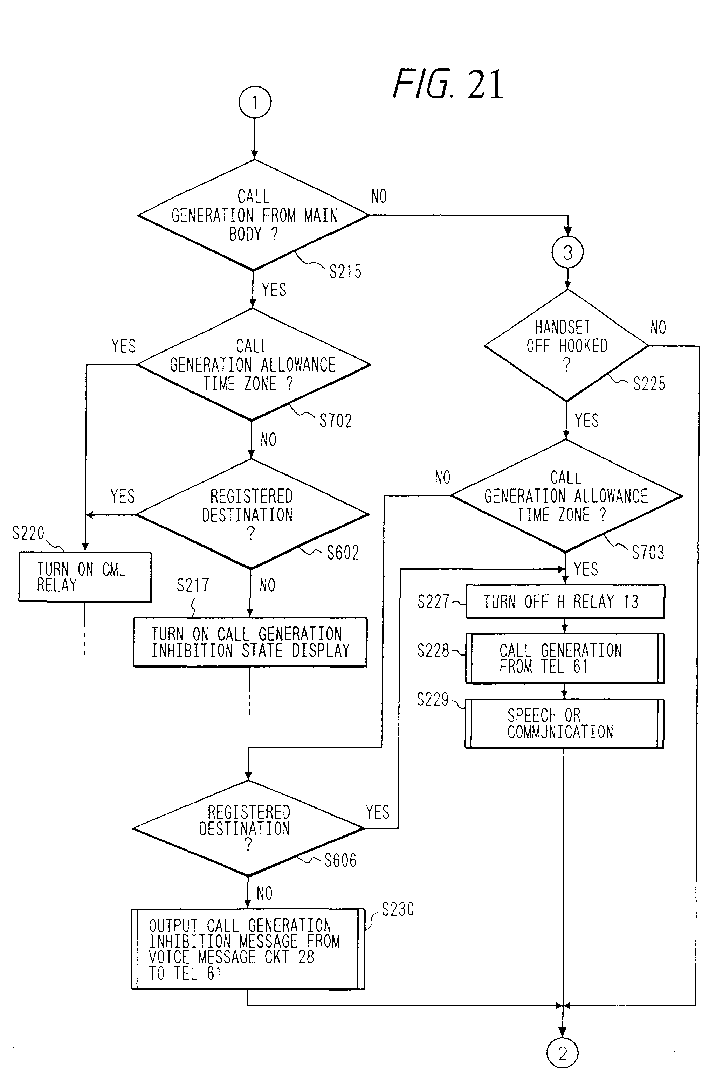

The thirteenth embodiment of the invention will now be described with reference to Fig. 21. In the above eleventh embodiment, further, even in the call generating operation inhibition time zone, when the call generation is executed to a specific dial to permit the call generating operation, such a call generation can be also permitted. Fig. 21 shows a specific example of a control procedure in such a case. Fig. 21 is a flowchart showing a control procedure of portions different from Figs. 16 and 17 mentioned above.

In step S215 in Fig. 21, when the call generation is selected by the operation of the ten-key, abbreviation dial key, one-touch dial key, or the like in the console unit 10', step S702 follows. The information of the call generation allowance time and call generation inhibition time registered in the memory circuit 23 is inputted, respectively, and a check is made to see if the present time lies within a range from the call generation allowance time to the call generation inhibition time or not. When the present time lies within the range from the call generation allowance time to the call generation inhibition time, step S220 follows and the CML relay 5 is turned on. When the present time is out of the range from the call generation inhibition time to the call generation allowance time, step S602 follows. The call generation allowance dial information registered in the memory circuit 23 is inputted and a check is made to see if it indicates the destination which permits the call generating operation or not.

When the handset of the telephone 61 is off-hooked in step S225 in Fig. 21, step S703 follows. The information of the call generation allowance time and call generation inhibition time registered in the memory circuit 23 is inputted, respectively. A check is made to see if the present time lies within a range from the call generation allowance time to the call generation inhibition time or not. When the present time lies within the range from the call generation allowance time to the call generation inhibition time, step S227 follows and the H relay is turned off. When the present time is out of the range from the call generation inhibition time to the call generation allowance time, step S606 follows. The call generation allowance dial information registered in the memory circuit 23 is inputted and a check is made to see if it indicates the destination which permits the call generating operation or not.

Although the present invention has been described above on the basis of the facsimile, the invention can be also applied to a data communication apparatus for communicating computer data through the modem. Terminals other than the telephone can be also connected.

## Claims

1. A communication apparatus comprising:
communication means (9);
connecting means (5, 13) for connecting a communication line to one of said communication means and a terminal, said connecting means (5, 13) including first switching means (5) for disconnecting said communication means (9) from the communication line; and
control means (11) for controlling said connecting means (5, 13) for limiting an outgoing call from the terminal,
**characterized in that**
said connecting means (5, 13) comprises second switching means (13) for disconnecting the terminal from the communication line in an outgoing call limitation mode,
said control means (11) comprises means for controlling said connecting means (5, 13) such that an outgoing call performed by a second dial signal is enabled in accordance with an input of a predetermined first dial signal from the terminal,
said control means (11) comprises means for controlling said connecting means (5, 13) such that an outgoing call by the predetermined first dial signal is prevented by disconnecting connection with the communication line, and
said control means (11) comprises means for controlling said connecting means (5, 13) such that response by the terminal to an incoming call is enabled without the input of the predetermined first dial signal in a state where the outgoing call is limited.

2. An apparatus according to claim 1, wherein said connecting means (5, 13) comprises means for connecting the terminal with the communication line when the outgoing call by the second dial signal is enabled.

3. An apparatus according to claim 1, wherein said connecting means (5, 13) comprises means for connecting the terminal with the communication line when the terminal is enabled to respond to the incoming call.

4. An apparatus according to claim 1, wherein said first switching means (5) comprises means for disconnecting the terminal from the communication line while said communication means (9) is connected to the communication line.

5. An apparatus according to claim 1, wherein said control means (11) comprises means for controlling said connecting means (5, 13) in accordance with the input of a predetermined first dial signal such that the outgoing call is enabled while the terminal is in an off-hook state in which the predetermined first dial signal is output.

6. An apparatus according to claim 1, wherein said control means includes supplying means (3) for supplying power to the terminal while the terminal is disconnected from the communication line in the outgoing call limitation mode.

7. An apparatus according to claim 1, wherein said communication means is a facsimile communication means for performing facsimile communication.

8. An apparatus according to claim 1, wherein said control means comprises means for setting a mode of said communication means (9) according to which the incoming call is responded by one of the terminal and said communication means (9).

9. An apparatus according to claim 1, wherein said control means (11) comprises memory means (23) for storing a telephone number corresponding to the predetermined first dial signal, and comprises means for detecting the input of the predetermined first dial signal based on the telephone number stored in said memory means.

10. An apparatus according to claim 1, wherein said control means (11) comprises means for judging whether a predetermined operation is performed when a number is input, and for outputting the result of the judgment.

11. An apparatus according to claim 1, wherein said control means (11) comprises means for outputting a voice message when a dial signal from the terminal is not coincident with the predetermined first dial signal.

12. An apparatus according to claim 1, wherein said control means (11) comprises means for controlling said connecting means (5, 13) such that the outgoing call by the second dial signal is enabled in accordance with the input of the predetermined first dial signal from the terminal by disconnecting the terminal from the communication line.

13. An outgoing call limitation method for a communication apparatus comprising connecting means (5, 13) for connecting a communication line to one of communication means (9) and a terminal, wherein said connecting means (5, 13) includes first switching means (5) and second switching means (13), said method comprising a first step (S95) of controlling said first switching means (5) so as to disconnect said communication means (9) from the communication line, said method being **characterized in that** it comprises:
a second step (S32, S33, S36, S51, S52, S44, S86, S88, S92) of controlling said connecting means such that an outgoing call performed by a second dial signal is enabled in accordance with an input of a predetermined first dial signal from the terminal;
a third step (S29, S30, S41, S42, S90, S92) of controlling said second switching means (13) such that an outgoing call by the predetermined first dial signal is prevented by disconnecting the terminal from the communication line in a state where an outgoing call is limited; and
a fourth step (S21, S23, S25, S43, S44, S45, S46, S80, S82, S85) of controlling said connecting means such that response by the terminal to an incoming call is enabled without the input of the predetermined first dial in a state where the outgoing call is limited.

14. A method according to claim 13, wherein the terminal is connected with the communication line when the outgoing call by the second dial signal is enabled.

15. A method according to claim 13, wherein the terminal is connected with the communication line when the terminal is enabled to respond to the incoming call.

16. A method according to claim 13, wherein in accordance with the input of a predetermined first dial signal, the outgoing call is enabled while the terminal is in an off-hook state in which the predetermined first dial signal is output.

17. A method according to claim 13, wherein power is supplied to the terminal while the terminal is disconnected from the communication line in the outgoing call limitation mode.

18. A method according to claim 13, wherein the incoming call is responded by one of the terminal and the communication apparatus in accordance with a mode of the communication apparatus.

19. A method according to claim 13, wherein the input of the predetermined first dial signal is detected based on a telephone number stored in a memory.

20. A method according to claim 13, wherein whether the outgoing call is allowed or not is output in said third step (S88-1, S88-2).

21. A method according to claim 13, wherein a voice signal is output (S88-1) when a dial signal from the terminal is not coincident with the predetermined first dial signal.

22. A method according to claim 13, wherein the outgoing call by the second dial signal is enabled in accordance with the input of the predetermined first dial signal from the terminal by disconnecting the terminal from the communication line.

## Patentansprüche

1. Kommunikationsgerät mit
einer Kommunikationseinrichtung (9),
einer Verbindungseinrichtung (5, 13) zur Verbindung einer Kommunikationsleitung mit entweder der Kommunikationseinrichtung oder einem Endgerät, wobei die Verbindungseinrichtung (5, 13) eine erste Schalteinrichtung (5) zum Trennen der Kommunikationseinrichtung (9) von der Kommunikationsleitung aufweist, und
einer Steuerungseinrichtung (11) zur Steuerung der Verbindungseinrichtung (5, 13) zur Begrenzung eines ausgehenden Rufs aus dem Endgerät,
**dadurch gekennzeichnet, dass**
die Verbindungseinrichtung (5, 13) eine zweite Schalteinrichtung (13) zum Trennen des Endgeräts von der Kommunikationsleitung in einer Betriebsart zur Begrenzung eines ausgehenden Rufs aufweist,
die Steuerungseinrichtung (11) eine Einrichtung zur derartigen Steuerung der Verbindungseinrichtung (5, 13) aufweist, dass ein durch ein zweites Wählsignal durchgeführter ausgehender Ruf entsprechend einer Eingabe eines vorbestimmten ersten Wählsignals aus dem Endgerät ermöglicht wird,
die Steuerungseinrichtung (11) eine Einrichtung zur derartigen Steuerung der Verbindungseinrichtung (5, 13) aufweist, dass ein ausgehender Ruf durch das vorbestimmte erste Wählsignal verhindert wird, indem eine Verbindung mit der Kommunikationsleitung getrennt wird, und
die Steuerungseinrichtung (11) eine Einrichtung zur derartigen Steuerung der Verbindungseinrichtung (5, 13) aufweist, dass in einem Zustand, in dem der ausgehende Ruf begrenzt ist, eine Antwort durch das Endgerät auf einen hereinkommenden Ruf ohne Eingabe des vorbestimmten ersten Wählsignals ermöglicht wird.

2. Gerät nach Anspruch 1, wobei die Verbindungseinrichtung (5, 13) eine Einrichtung aufweist zur Verbindung des Endgeräts mit der Kommunikationsleitung, wenn der ausgehende Ruf durch das zweite Wählsignal ermöglicht ist.

3. Gerät nach Anspruch 1, wobei die Verbindungseinrichtung (5, 13) eine Einrichtung aufweist zur Verbindung des Endgeräts mit der Kommunikationsleitung, wenn ermöglicht ist, dass das Gerät auf den eingehenden Ruf antworten kann.

4. Gerät nach Anspruch 1, wobei die erste Schalteinrichtung (5) eine Einrichtung aufweist zum Trennen des Endgeräts von der Kommunikationsleitung, während die Kommunikationseinrichtung (9) mit der Kommunikationsleitung verbunden ist.

5. Gerät nach Anspruch 1, wobei die Steuerungseinrichtung (11) eine Einrichtung aufweist zur Steuerung der Verbindungseinrichtung (5, 13) entsprechend der Eingabe eines vorbestimmten ersten Wählsignals derart, dass der ausgehende Ruf ermöglicht wird, während sich das Endgerät in einem ausgehängtem Zustand befindet, in dem das erste Wählsignal ausgegeben wird.

6. Gerät nach Anspruch 1, wobei die Steuerungseinrichtung eine Zufuhreinrichtung (3) aufweist zur Zufuhr von Energie zu dem Endgerät in der Betriebsart zur Begrenzung eines ausgehenden Rufs, während das Endgerät von der Kommunikationsleitung getrennt ist.

7. Gerät nach Anspruch 1, wobei die Kommunikationseinrichtung eine Faksimilekommunikationseinrichtung zur Durchführung einer Faksimilekommunikation ist.

8. Gerät nach Anspruch 1, wobei die Steuerungseinrichtung eine Einrichtung aufweist zur Einstellung einer Betriebsart der Kommunikationseinrichtung (9) entsprechend der der eingehenden Ruf durch entweder das Endgerät oder die Kommunikationseinrichtung (9) beantwortet wird.

9. Gerät nach Anspruch 1, wobei die Steuerungseinrichtung (11) eine Speichereinrichtung (23) zum Speichern eine Telefonnummer entsprechend dem vorbestimmten ersten Wählsignal aufweist und eine Einrichtung zur Erfassung der Eingabe des vorbestimmten ersten Wählsignals auf der Grundlage der in der Speichereinrichtung gespeicherten Telefonnummer aufweist.

10. Gerät nach Anspruch 1, wobei die Steuerungseinrichtung (11) eine Einrichtung zur Beurteilung, ob ein vorbestimmter Vorgang durchgeführt wird, wenn eine Nummer eingegeben wird, und zur Ausgabe des Ergebnisses der Beurteilung aufweist.

11. Gerät nach Anspruch 1, wobei die Steuerungseinrichtung (11) eine Einrichtung aufweist zur Ausgabe einer Sprachmitteilung, wenn ein Wählsignal aus dem Endgerät nicht mit dem vorbestimmten ersten Wählsignal übereinstimmt.

12. Gerät nach Anspruch 1, wobei die Steuerungseinrichtung (11) eine Einrichtung aufweist zur Steuerung der Verbindungseinrichtung (5, 13) derart, dass der ausgehende Ruf durch das zweite Wählsignal entsprechend der Eingabe des vorbestimmten ersten Wählsignals aus dem Endgerät ermöglicht wird, indem das Endgerät von der Kommunikationsleitung getrennt wird.

13. Verfahren zur Begrenzung eines ausgehenden Rufs für ein Kommunikationsgerät mit einer Kommunikationseinrichtung (9), einer Verbindungseinrichtung (5, 13) zur Verbindung einer Kommunikationsleitung mit entweder der Kommunikationseinrichtung (9) oder einem Endgerät, wobei die Verbindungsseinrichtung (5, 13) eine erste Schalteinrichtung (5) und eine zweite Schalteinrichtung (13) aufweist, wobei das Verfahren einen ersten Schritt (S95) zur Steuerung der ersten Schalteinrichtung (5) zum Trennen der Kommunikationseinrichtung (9) von der Kommunikationsleitung aufweist, und wobei das Verfahren **dadurch gekennzeichnet ist, dass** es aufweist:
einen zweiten Schritt (S32, S33, S36, S51, S52, S44, S86, S88, S92) des Steuerns der Verbindungseinrichtung derart, dass ein durch ein zweites Wählsignal durchgeführter ausgehender Ruf entsprechend einer Eingabe eines vorbestimmten ersten Wählsignals aus dem Endgerät ermöglicht wird,
einen dritten Schritt (S29, S30, S41, S42, S90, S92) des Steuerns der zweiten Schalteinrichtung (13) derart, dass ein ausgehender Ruf in einem Zustand, in dem ein ausgehender Ruf begrenzt ist, durch das vorbestimmte erste Wählsignal verhindert wird, indem eine Verbindung mit der Kommunikationsleitung getrennt wird, und
einen vierten Schritt (S21, S23, S25, S43, S44, S45, S46, S80, S82, S85) des Steuerns der Verbindungseinrichtung derart, dass in einem Zustand, in dem der ausgehende Ruf begrenzt ist, eine Antwort durch das Endgerät auf einen hereinkommenden Ruf ohne Eingabe des vorbestimmten ersten Wählsignals ermöglicht wird.

14. Verfahren nach Anspruch 13, wobei das Endgerät mit der Kommunikationsleitung verbunden wird, wenn der ausgehende Ruf durch das zweite Wählsignal ermöglicht ist.

15. Verfahren nach Anspruch 13, wobei das Endgerät mit der Kommunikationsleitung verbunden wird, wenn ermöglicht wird, dass das Endgerät auf den hereinkommenden Ruf antworten kann.

16. Verfahren nach Anspruch 13, wobei entsprechend der Eingabe eines vorbestimmten ersten Wählsignal der ausgehende Ruf ermöglicht wird, während sich das Endgerät im ausgehängten Zustand befindet, in dem das vorbestimmte erste Wählsignal ausgegeben wird.

17. Verfahren nach Anspruch 13, wobei Energie dem Endgerät zugeführt wird, während das Endgerät von der Kommunikationsleitung in der Betriebsart zur Begrenzung eines ausgehenden Rufs getrennt ist.

18. Verfahren nach Anspruch 13, wobei der hereinkommende Ruf durch entweder das Endgerät oder das Kommunikationsgerät entsprechend einer Betriebsart des Kommunikationsgeräts beantwortet wird.

19. Verfahren nach Anspruch 13, wobei die Eingabe des ersten Wählsignals auf der Grundlage einer in einem Speicher gespeicherten Telefonnummer erfasst wird.

20. Verfahren nach Anspruch 13, wobei in dem dritten Schritt (S88-1, S88-2) ausgegeben wird, ob der ausgehende Ruf erlaubt ist oder nicht.

21. Verfahren nach Anspruch 13, wobei ein Sprachsignal (S88-1) ausgegeben wird, wenn ein Wählsignal aus dem Endgerät nicht mit dem vorbestimmten ersten Wählsignal übereinstimmt.

22. Verfahren nach Anspruch 13, wobei der ausgehende Ruf durch das zweite Wählsignal entsprechend der Eingabe des ersten vorbestimmten Wählsignals aus dem Endgerät ermöglicht wird, indem das Endgerät von der Kommunikationsleitung getrennt wird.

## Revendications

1. Appareil de communication comprenant :
des moyens de communications (9) ;
un moyen de connexion (5, 13) pour connecter une ligne de communication à l'un desdits moyens de communication et à un terminal, ledit moyen de connexion (5, 13) comportant un premier moyen de commutation (5) pour déconnecter lesdits moyens de communication (9) de la ligne de communication ; et
un moyen de commande (11) pour commander ledit moyen de connexion (5, 13) afin de limiter un appel sortant provenant du terminal,
**caractérisé en ce que**
ledit moyen de connexion (5, 13) comprend un second moyen de commutation (13) pour déconnecter le terminal de la ligne de communication dans un mode de limitation d'appel sortant,
ledit moyen de commande (11) comprend un moyen pour commander ledit moyen de connexion (5, 13) de façon qu'un appel sortant effectué par un second signal de numérotation soit permis en conformité avec la fourniture en entrée d'un premier signal de numérotation prédéterminé provenant du terminal,
ledit moyen de commande (11) comprend un moyen pour commander ledit moyen de connexion (5, 13) de façon qu'un appel sortant produit par le premier signal de numérotation prédéterminé soit empêché en déconnectant la connexion de la ligne de communication, et
ledit moyen de commande (11) comprend un moyen pour commander ledit moyen de connexion (5, 13) de façon qu'une réponse du terminal à un appel entrant soit permise sans la fourniture en entrée du premier signal de numérotation prédéterminé dans un état dans lequel l'appel sortant est limité.

2. Appareil selon la revendication 1, dans lequel ledit moyen de connexion (5, 13) comprend un moyen pour connecter le terminal à la ligne de communication lorsque l'appel sortant produit par le second signal de numérotation est permis.

3. Appareil selon la revendication 1, dans lequel ledit moyen de connexion (5, 13) comprend un moyen pour connecter le terminal à la ligne de communication lorsque le terminal est activé en réponse à l'appel entrant.

4. Appareil selon la revendication 1, dans lequel ledit premier moyen de commutation (5) comprend un moyen pour déconnecter le terminal de la ligne de communication pendant que ledit moyen de communication (9) est connecté à la ligne de communication.

5. Appareil selon la revendication 1, dans lequel ledit moyen de commande (11) comprend un moyen pour commander ledit moyen de connexion (5, 13) en conformité avec la fourniture en entrée d'un premier signal de numérotation prédéterminé de façon que l'appel sortant soit permis pendant que le terminal est dans un état décroché dans lequel le premier signal de numérotation prédéterminé est fourni en sortie.

6. Appareil selon la revendication 1, dans lequel ledit moyen de commande comprend un moyen d'alimentation (3) pour alimenter en énergie le terminal pendant que le terminal est déconnecté de la ligne de communication dans le mode de limitation d'appels sortants.

7. Appareil selon la revendication 1, dans lequel ledit moyen de communication est un moyen de communication de télécopie destiné à effectuer une communication de télécopie.

8. Appareil selon la revendication 1, dans lequel ledit moyen de commande comprend un moyen pour régler un mode dudit moyen de communication (9) selon lequel l'appel entrant reçoit une réponse de l'un du terminal et desdits moyens de communication (9).

9. Appareil selon la revendication 1, dans lequel ledit moyen de commande (11) comprend un moyen à mémoire (23) pour stocker un numéro de téléphone correspondant au premier signal de numérotation prédéterminé, et comprend un moyen pour détecter la fourniture en entrée du premier signal de numérotation prédéterminé sur la base du numéro de téléphone stocké dans ledit moyen à mémoire.

10. Appareil selon la revendication 1, dans lequel ledit moyen de commande (11) comprend un moyen pour juger si une opération prédéterminée est effectuée lorsqu'un numéro est fourni en entrée, et pour fournir en sortie le résultat du jugement.

11. Appareil selon la revendication 1, dans lequel ledit moyen de commande (11) comprend un moyen pour fournir en sortie un message vocal lorsqu'un signal de numérotation provenant du terminal ne coïncide pas avec le premier signal de numérotation prédéterminé.

12. Appareil selon la revendication 1, dans lequel ledit moyen de commande (11) comprend un moyen pour commander ledit moyen de connexion (5, 13) de façon que l'appel sortant constitué par le second signal de numérotation soit permis en conformité avec la fourniture en entrée par le terminal du premier signal de numérotation prédéterminé en déconnectant le terminal de la ligne de communication.

13. Procédé de limitation d'appels sortants pour un appareil de communication comprenant un moyen de connexion (5, 13) pour connecter une ligne de communication à l'un de moyens de communication (9) et à un terminal, dans lequel ledit moyen de connexion (5, 13) comporte un premier moyen de commutation (5) et un second moyen de commutation (13), ledit procédé comprenant une première étape (S95) consistant à commander ledit premier moyen de commutation (5) afin de déconnecter ledit moyen de communication (9) de la ligne de communication, ledit procédé étant **caractérisé en ce qu'**il comprend :
une seconde étape (S32, S33, S36, S51, S52, S44, S86, S88, S92) consistant à commander ledit moyen de connexion de façon qu'un appel sortant effectué par un second signal de numérotation soit permis en conformité avec la fourniture en entrée par le terminal d'un premier signal de numérotation prédéterminé ;
une troisième étape (S29, S30, S41, S42, S90, S92) consistant à commander ledit second moyen de commutation (13) de façon qu'un appel sortant constitué par le premier signal de numérotation prédéterminé soit empêché en déconnectant le terminal de la ligne de communication dans un état dans lequel un appel sortant est limité ; et
une quatrième étape (S21, S23, S25, S43, S44, S45, S46, S80, S82, S85) consistant à commander ledit moyen de connexion de façon que la réponse fournie par le terminal à un appel entrant soit permise sans la fourniture en entrée du premier signal de numérotation prédéterminé dans un état dans lequel l'appel sortant est limité.

14. Procédé selon la revendication 13, dans lequel le terminal est connecté à la ligne de communication lorsque l'appel sortant constitué par le second signal de numérotation est permis.

15. Procédé selon la revendication 13, dans lequel le terminal est connecté à la ligne de communication lorsqu'il est permis au terminal de répondre à l'appel entrant.

16. Procédé selon la revendication 13, dans lequel, en conformité avec la fourniture en entrée d'un premier signal de numérotation prédéterminé, l'appel sortant est permis pendant que le terminal est dans un état décroché dans lequel le premier signal de numérotation prédéterminé est fourni en sortie.

17. Procédé selon la revendication 13, dans lequel de l'énergie est fournie au terminal pendant que le terminal est déconnecté de la ligne de communication dans le mode de limitation d'appels sortants.

18. Procédé selon la revendication 13, dans lequel une réponse est fournie à l'appel entrant par l'un du terminal et de l'appareil de communication en conformité avec un mode de fonctionnement de l'appareil de communication.

19. Procédé selon la revendication 13, dans lequel la fourniture en entrée du premier signal de numérotation prédéterminé est détectée sur la base d'un numéro de téléphone stocké dans une mémoire.

20. Procédé selon la revendication 13, dans lequel le fait de savoir si l'appel sortant est autorisé ou non est indiqué en sortie lors de ladite troisième étape (S88-1, S88-2).

21. Procédé selon la revendication 13, dans lequel un signal vocal est fourni en sortie (S88-1) lorsqu'un signal de numérotation provenant du terminal ne coïncide pas avec le premier signal de numérotation prédéterminé.

22. Procédé selon la revendication 13, dans lequel l'appel sortant constitué par le second signal de numérotation est permis en conformité avec la fourniture en entrée par le terminal du premier signal de numérotation prédéterminé en déconnectant le terminal de la ligne de communication.
